# EUROPÄISCHE PATENTSCHRIFT

(11) **EP 3 835 713 B1**
(45) Veröffentlichungstag und Bekanntmachung des Hinweises auf die Patenterteilung: **13.07.2022**
(21) Anmeldenummer: 19214915.1
(22) Anmeldetag: 10.12.2019
(51) Int. Cl.: G01B 5/008, G05B 19/401

(54) **VERFAHREN ZUM BESTIMMEN VON DIMENSIONELLEN EIGENSCHAFTEN EINES MESSOBJEKTS MITTELS EINES KOORDINATENMESSGERÄTES**
METHOD FOR DETERMINING THE DIMENSIONS OF A MEASURING OBJECT BY MEANS OF A COORDINATE MEASURING DEVICE
PROCÉDÉ DE DÉTERMINATION DES PROPRIÉTÉS DIMENSIONNELLES D'UN OBJET DE MESURE AU MOYEN D'UN APPAREIL DE MESURE DE COORDONNÉS

(43) Veröffentlichungstag der Anmeldung: 16.06.2021
(73) Patentinhaber: Carl Zeiss Industrielle Messtechnik GmbH, 73447 Oberkochen (DE)
(72) Erfinder: Frank, Jonas Michael, 74597 Stimpfach (DE)
(74) Vertreter: Witte, Weller & Partner Patentanwälte mbB

(56) Entgegenhaltungen:
- DE-A1-102012 024 934
- US-A1- 2019 279 354
- US-A1- 2019 316 893
- LU C G ET AL: "AN ARTIFICIAL INTELLIGENT (A1) INSPECTION PATH MANAGEMENT FOR MULTIPLE TASKS MEASUREMENT ON CO-ORDINATE MEASURING MACHINE(CMM): AN APPLICATION OF NEURAL NETWORK TECHNOLOGY", PROCEEDINGS OF THE 1995 IEEE ANNUAL INTERNATIONAL ENGINEERING MANAGEMENT CONFERENCE. SINGAPORE, JUNE 28 - 30, 1995; [PROCEEDINGS OF THE ANNUAL INTERNATIONAL ENGINEERING MANAGEMENT CONFERENCE], NEW YORK, IEEE, US, 28. Juni 1995 (1995-06-28), Seiten 353-357, XP000555122, ISBN: 978-0-7803-2900-3

## Beschreibung

Die vorliegende Erfindung betrifft ein Verfahren und eine Vorrichtung zum Bestimmen von dimensionellen Eigenschaften eines Messobjekts. Die Vorrichtung weist einen Messkopf zum Erfassen eines Messpunktes an dem Messobjekt, eine Auswerte- und Steuereinheit zum Steuern von Antrieben des Koordinatenmessgerätes, und einen Datenspeicher, in dem eine Datenbank bereitgestellt ist, auf.

Prinzipiell ist es möglich, die Bewegungen des Messkopfes relativ zu dem Messobjekt und die Aufnahme von Messwerten von Hand zu steuern. Beispielsweise wird von der Anmelderin eine Messsensorik namens T-Scan vertrieben, mit der ein optisches oder taktiles Abtasten von zu vermessenden Objekten bspw. im Zuge des sogenannten Reverse-Engineering erfolgen kann.

Bei der Qualitätskontrolle von industriell hergestellten Produkten ist jedoch ein automatisierter Messablauf wünschenswert, so dass bspw. eine Vielzahl von Messobjekten möglichst schnell und reproduzierbar gemessen werden kann. Bei einem solchen Messablauf wird ein Messkopf des Koordinatenmessgerätes entlang eines vordefinierten Messpfades bewegt, der vorab durch eine Software-Applikation in Abhängigkeit des zu vermessenden Objektes geplant wurde. Die Erstellung eines solch automatisierten Messablaufs erfordert Kenntnisse über die Funktionsweise von Koordinatenmessgeräten und Erfahrung, wie verschiedene Messobjekte am besten vermessen werden können.

Im Falle einer flexiblen Messumgebung bzw. bei ständig wechselnden Messbedingungen erfolgt zum heutigen Stand der Technik die Messpfadplanung oftmals in Echtzeit unmittelbar vor der jeweiligen Bewegung des Messkopfes.

Beispielsweise bietet die Carl Zeiss Industrielle Messtechnik GmbH unter der Bezeichnung CALYPSO eine Software zur Erstellung solcher Echtzeit-Messpfade bzw. Echtzeit-Messabläufe und zur Verarbeitung der erhaltenen Messergebnisse an. Die Grundlagen von CALYPSO sind beispielsweise in einer Broschüre mit dem Titel "*Einfach Messen und was Sie dazu wissen sollten* - *Eine Fibel der Messtechnik*" (Bestellnummer bei Carl Zeiss: 61212- 2400101) oder in einer Werbebroschüre der Carl Zeiss Industrielle Messtechnik GmbH mit dem Titel "*Calypso*. *Einfach programmieren"* (Publikationsnummer 60-11-068) beschrieben.

Die Erstellung des Messablaufs mit CALYPSO erfolgt anhand von sogenannten Prüfmerkmalen. Ein Prüfmerkmal repräsentiert eine dimensionelle Ist-Eigenschaft eines oder mehrerer geometrischer Elemente (sogenannte Messelemente) an einem Messobjekt, wie etwa den Durchmesser einer Bohrung, die Rundheit eines Zylinderabschnitts oder der relative Abstand zwischen zwei Geometrieelementen. Um ein Prüfmerkmal zu quantifizieren, müssen in der Regel mehrere Messpunkte an einem Messobjekt erfasst und durch den Messkopf angefahren werden.

Zum Erstellen des Messablaufs legt der Anwender die gewünschten Prüfmerkmale häufig anhand von CAD-Daten fest und wählt in diesem Zusammenhang diverse Parameter, einschließlich Parametern für die späteren Maschinenbewegungen. CALYPSO bietet zu diesem Zweck jeweils voreingestellte Parameter an, die sich für eine große Zahl an Messaufgaben bewährt haben. Grundsätzlich können Messelemente und Prüfmerkmale auch ohne CAD-Daten angelegt werden (z.B. indem die Solldaten von einem Anwender eingegeben werden). Zudem können die Parameter durch einen erfahrenen Anwender verändert werden, um den Messablauf bestimmten Messbedingungen (z.B. eine Verfahrgeschwindigkeit oder Toleranz) anzupassen. Durch die Orientierung an Prüfmerkmalen erleichtert CALYPSO dem Anwender die Erstellung des Messablaufs, da die Prüfmerkmale in der Regel mit Angaben korrespondieren, die der Bediener einer technischen Zeichnung des Messobjekts entnehmen kann.

Mit der Auswahl der Prüfmerkmale erstellt CALYPSO Steuerbefehle, bspw. für eine CNC-Steuerung, mit denen der Messkopf derart gesteuert wird, dass ein gewünschter Messpunkt ausgehend von einer Startposition, an der sich der Messkopf gerade befindet, angefahren werden kann. Die Position, in der der Messpunkt gemessen wird, entspricht einer Zielposition, an die der Messkopf ausgehend von der Startposition verfahren werden soll. Beispielsweise kann der Messkopf von einem ersten Messpunkt an einem Messobjekt zu einem zweiten Messpunkt an demselben Messobjekt oder zwischen zwei verschiedenen Messobjekten verfahren werden.

Die Pfadplanung im CNC-Betrieb kann durch Berechnung eines jeweiligen Messpfades zwischen den jeweiligen Start- und Zielpositionen mittels eines Algorithmus erfolgen, wobei vorzugsweise unmittelbar vor jeder Bewegung des Messkopfes der kürzeste bzw. schnellste Weg zwischen der Start- und Zielposition berechnet und ausgewählt werden kann. Bei dieser Echtzeit-Berechnung kann eine Vielzahl von Informationen über die Messumgebung bzw. den Messaufbau sowie gegebenenfalls vorhandene oder neu hinzugekommene Störkonturen einbezogen werden, um einen kollisionsfreien Messablauf zu gewährleisten.

Die zur Echtzeit-Pfadplanung verwendeten Algorithmen, bspw. ein sogenannter Rapidly-Exploring-Random-Tree-Algorithmus, können zufallsbasiert arbeiten. Dies führt dazu, dass selbst bei gleichbleibender Start- und Zielposition eine erneute Berechnung eines Messpfades zwischen der Start- und Zielposition zu einem abweichenden Messpfad führen kann, der gegenüber einem zuvor berechneten Messpfad abweicht, d.h. bspw. kürzer oder länger ist.

Dies führt wiederrum dazu, dass es bei einer Wiederholung ein und desselben Messvorgangs zum Teil zu abweichenden Messpfaden und abweichenden Messzeiten kommt, obwohl die Start- und Zielposition identisch ist. Trotz eigentlich identischer Messpfade sind die Start- und Zielposition jedoch nicht immer exakt gleich, da jedes Koordinatenmessgerät eine begrenzte Mess- und Anfahrgenauigkeit aufweist. Zusätzlich zu der Mess- und Anfahrgenauigkeit des Koordinatenmessgerätes bzw. der Genauigkeit der translatorischen und rotatorischen Bewegungsachsen des Koordinatenmessgerätes, kann auch das zu vermessende Messobjekt (z.B. Bauteil) Einfluss auf die Start- und Zielposition haben.

Wird bspw. der gleiche Prüfplan mehrfach mit verschiedenen Messobjekten ausgeführt, kann bspw. auch eine Ausrichtung des Messobjektes einen Einfluss auf eine Ausrichtung eines Basissystems (das bauteilbezogene Koordinatensystem in dem Maschinenkoordinatensystem) haben. Es ist nämlich davon auszugehen, dass das Messobjekt nicht exakt gleich positioniert werden kann, weshalb das Basissystem in der Regel neu eingemessen, d.h. eine Transformation von dem Basissystem zu dem Maschinenkoordinatensystem neu berechnet, wird. Der Prüfplan selbst (z.B. die Messelemente) sind normalerweise auf das Basissystem bezogen. Die Bewegung der Maschine erfolgt im Endeffekt in dem Maschinenkoordinatensystem. Die Anfahrposition bzw. die "Wegfahrposition" (allgemein: Übergabeposition) zu und von einem Messelement in dem Maschinenkoordinatensystem und/oder die Ausrichtung des Messelements (z.B. einer Gerade) und daraus folgend beispielsweise die Winkelstellung der Maschine an der Übergabeposition können sich somit leicht unterscheiden.

Dies erscheint insbesondere bei hoch getakteten Messabläufen, bspw. zur Qualitätssicherung von Bauteilen im industriellen Umfeld, hinsichtlich der zeitlichen Bestimmtheit und der erreichbaren Genauigkeit problematisch. Somit ist diese Echtzeit-Pfadplanung aufgrund der zufallsbasierten Berechnung von Messpfades ein zeitkritischer Vorgang und kann nur geringfügig optimiert werden, da für eine tiefergreifende Messpfadoptimierung keine Rechenzeit verbleibt.

Eine weitere Problematik bei der Echtzeit-Messpfadplanung ist, dass Anwender von Messgeräten aus Gewohnheit gleichbleibende Bewegungsabläufe und gleichbleibende Messzeiten für die Vermessung derselben Messobjekte erwarten. Bspw. werden bei der industriellen Fertigung Bestückungszeiten, die zur Bestückung des Messgerätes mit einem neuen Messobjekt benötigt werden, im Voraus unter Einbeziehung der Messzeit derart vorgeplant und optimiert, dass eine gewisse Stückzahl pro Stunde oder pro Arbeitsschicht erreicht werden kann. Somit ist auch hierfür eine möglichst gleichbleibende Messzeit notwendig.

Der Echtzeit-Pfadberechnung steht das Vorgehen bei der Pfadplanung in typischen Arbeitsbereichen von Industrierobotern gegenüber. Diese Industrieroboter werden bspw. in voll- oder teilautomatischen Produktionslinien eingesetzt. Hierbei ist im Regelfall jeder Industrieroboter mit einem vorbestimmten Arbeitsschritt (z.B. dem Stanzen von Löchern) beauftragt und weist bei jedem Arbeitsschritt einen gleichbleibenden oder nur begrenzt variierenden Bewegungsablauf auf. Durch diese Konstanz ist es möglich, die Arbeitspfade des Industrieroboters zeitlich entkoppelt mittels einer Pfadplanungssoftware im Voraus vorauszuberechnen und bspw. in einer Robotersteuerung maschinenlesbar abzuspeichern. Hierdurch ist diese Art der Pfadplanung kein zeitkritischer Vorgang. Es kann selbst unter hohem zeitlichen Aufwand eine Optimierung des Messpfades im Voraus durchgeführt werden, wobei auch Arbeitstoleranzen des Industrieroboters rechnerisch eliminiert werden können, ohne eine zeitkritische Größe darzustellen. Ein weiteres Beispiel für eine Vorberechnung der Arbeitspfade stellt die Erzeugung sogenannter Scanning-Bahnen dar, welche ebenfalls im Voraus generiert und in einem Messelement des Prüfplans abgespeichert werden.

Trotz der oben genannten Problematik ist es bei einer Vielzahl von Messvorgängen in verschiedenen Anwendungsbereichen sinnvoll, die zugehörigen Prüfpläne flexibel zu gestalten. Hierbei eignet sich die Pfadplanung, wie sie bei Industrierobotern gemacht wird, jedoch nur begrenzt, so dass bisweilen die Echtzeit-Pfadplanung zum Einsatz kommt. Beispielsweise kann sich in machen Prüfplänen und bei der Vermessung von Messobjekten die Anzahl und/oder Reihenfolge von Messpunkten, die in dem CNC-Betrieb angefahren werden, ändern. Aufgrund dessen ist es bislang in solchen Fällen notwendig, dass die Messpfadplanung weiterhin in Echtzeit erfolgt. Aus Performance- und Zeitgründen ist es bisweilen nicht sinnvoll, Messpfade, wie im Falle der Industrieroboter, im Voraus zu planen. Zudem kann es vorkommen, dass eine Reihenfolge der Messelemente in einem CNC-Steuerablauf nicht von Anfang an bekannt ist und sich bspw. erst während des Messvorganges ergibt. In solchen Fällen ist folglich keine Vorberechnung der Messpfade möglich.

Die Publikation "An Artificial Intelligent (AI) Inspection Path Management for Multiple Tasks Measurement on Co-Ordinate Measuring Machine (CMM): An Application of Neural Network Technology" von C.G.Lu, D.Morton, P.Myler und M.H. Wu in PROCEEDINGS OF THE ANNUAL INTERNATIONAL ENGINEERING MANAGEMENT CONFERENCE, NEW YORK, IEEE, US, 28. Juni 1995 (1995-06-28), Seiten 353-357, beschreibt eine Pfadplanung für ein Koordinatenmessgerät. Dabei wird in Abhängigkeit von Benutzereingaben und unter Verwendung einer Datenbank mit Messpfaddaten sowie unter Verwendung eines künstlichen neuronalen Netzwerks ein Messpfad bestimmt und der Steuerung des Koordinatenmessgerätes übergeben.

DE 10 2012 024934 A1 ein Verfahren zur erstmaligen Erstellung eines Messprogramms für die Messung eines neuen Messobjekts mit einem Messroboter, wobei der Messroboter wenigstens einen berührungslosen Messsensor aufweist und dieser Messsensor mit dem vom Messprogramm gesteuerten Messroboter in verschiedene Positionen relativ zu dem Messobjekt bewegt werden soll. Es ist vorgesehen, dass für das zu erstellende Messprogramm auf ein bereits vorhandenes Messprogramm zurückgegriffen wird, welches für ein bekanntes Messobjekt existiert, dass dem neuen Messobjekt möglichst ähnlich ist.

US 2019/0316893 A1 offenbart ein Messverfahren, bei dem der Messpfad im Betrieb dynamisch an eine erkannte Fehlausrichtung des Messobjekts angepasst wird.

US 2019/0279354 A1 offenbart ein Messsystem mit einem Roboter und einer Bilderfassungseinheit, wobei ein Messpfad aus einer Vielzahl von Messpfaden anhand eines vorgegebenen Kriteriums ausgewählt wird. Vor diesem Hintergrund ist es eine Aufgabe der vorliegenden Erfindung, ein Verfahren und eine Vorrichtung zur Bestimmung von dimensionellen Eigenschaften eines Messobjektes derart weiterzuentwickeln, dass die Planung von Messpfaden im Vergleich zu den Ansätzen aus dem Stand der Technik optimiert werden kann.

Gemäß einem ersten Aspekt der Erfindung wird die Aufgabe durch ein Verfahren zum Bestimmen von dimensionellen Eigenschaften eines Messobjekts mittels eines Koordinatenmessgerätes gelöst, das einen Messkopf zum Erfassen eines Messpunktes an dem Messobjekt, eine Auswerte- und Steuereinheit zum Steuern von Antrieben des Koordinatenmessgerätes, und einen Datenspeicher, in dem eine Datenbank bereitgestellt ist, aufweist. Das Verfahren weist die folgenden Schritte auf:
- Empfangen eines Eingabebefehls, der eine erste Startposition und eine erste Zielposition aufweist,
- Zugreifen auf die Datenbank, in der eine Vielzahl von vordefinierten Messpfaden gespeichert ist, die jeweils eine vordefinierte Startposition und Zielposition aufweisen,
- Durchsuchen der Datenbank nach einem ersten vordefinierten Messpfad mit einer zweiten Startposition und einer zweiten Zielposition, bei dem die erste und die zweite Startposition und die erste und die zweite Zielposition innerhalb einer vordefinierten Toleranz übereinstimmt, und
- wenn die erste und die zweite Startposition und die erste und die zweite Zielposition innerhalb der vordefinierten Toleranz übereinstimmt,
- Auslesen des ersten Messpfades aus der Datenbank, und
- Bewegen des Messkopfes entlang des ersten Messpfades von der zweiten Startposition zu der zweiten Zielposition, in der das Erfassen des Messpunktes erfolgt, und
- wenn die erste und die zweite Startposition und/oder die erste und die zweite Zielposition nicht innerhalb der vordefinierten Toleranz übereinstimmt,
- Berechnen eines zweiten Messpfades mit einer dritten Startposition und einer dritten Zielposition basierend auf dem Eingabebefehl,
- Speichern des zweiten Messpfades in der Datenbank, und
- Bewegen des Messkopfes entlang des zweiten Messpfades von der dritten Startposition zu der dritten Zielposition, in der das Erfassen des Messpunktes erfolgt, und
- Aufnehmen des Messpunktes an dem Messobjekt mit Hilfe des Messkopfes, und
- Bestimmen der dimensionellen Eigenschaften des Messobjekts basierend auf dem aufgenommenen Messpunkt.

Gemäß einem weiteren Aspekt der Erfindung wird die Aufgabe ferner durch eine Vorrichtung zum Bestimmen von dimensionellen Eigenschaften eines Messobjekts gelöst, die aufweist:
- eine Werkstückaufnahme zum Halten des Messobjektes,
- einen Messkopf zum Erfassen eines Messpunktes an dem Messobjekt, der relativ zu der Werkstückaufnahme verfahrbar ist,
- Antriebe zum Verfahren des Messkopfes entlang mehrerer Bewegungsachsen,
- eine Auswerte- und Steuereinheit zum Steuern der Antriebe und zum Empfangen eines Messsignals, das der Messkopf beim Erfassen des Messpunktes erzeugt, und
- einen Datenspeicher, in dem eine Datenbank bereitgestellt ist, in der eine Vielzahl von vordefinierten Messpfaden gespeichert ist, die jeweils eine vordefinierte Startposition und Zielposition aufweisen,
   wobei die Auswerte- und Steuereinheit dazu eingerichtet ist,
- einen Eingabebefehl zu empfangen, der eine erste Startposition und eine erste Zielposition, in der das Erfassen des Messpunktes an dem Messobjekt erfolgt, aufweist,
- auf die Datenbank zuzugreifen,
- die Datenbank nach einem ersten vordefinierten Messpfad mit einer zweiten Startposition und einer zweiten Zielposition, bei dem die erste und die zweite Startposition und die erste und die zweite Zielposition innerhalb einer vordefinierten Toleranz übereinstimmt, übereinstimmt, zu durchsuchen, und
   wenn die erste und die zweite Startposition und die erste und die zweite Zielposition innerhalb der vordefinierten Toleranz übereinstimmt,
- den ersten Messpfad aus der Datenbank auszulesen, und
- die Antriebe anzusteuern, um den Messkopf entlang des ersten Messpfades von der zweiten Startposition zu der zweiten Zielposition, in der das Erfassen des Messpunktes erfolgt, zu bewegen, und
   wenn die erste und die zweite Startposition und/oder die erste und die zweite Zielposition nicht innerhalb der vordefinierten Toleranz übereinstimmt,
- einen zweiten Messpfad mit einer dritten Startposition und einer dritten Zielposition basierend auf der ersten Startposition und der ersten Zielposition zu berechnen,
- den zweiten Messpfades in der Datenbank zu speichern, und
- die Antriebe anzusteuern, den Messkopf entlang des zweiten Messpfades von der dritten Startposition zu der dritten Zielposition, in der das Erfassen des Messpunktes erfolgt, zu bewegen, und
   wobei der Messkopf dazu eingerichtet ist, nach Erreichen der zweiten oder dritten Zielposition, den Messpunkt an dem Messobjekt in Form des Messsignals aufzunehmen und an die Auswerte- und Steuereinheit zu übermitteln, und wobei die Auswerte- und Steuereinheit ferner dazu eingerichtet ist, die dimensionellen Eigenschaften des Messobjekts basierend auf dem Messsignal zu ermitteln.

Besonders vorteilhaft ist es, wenn das neue Verfahren mit Hilfe eines Computerprogramms mit Programmcode realisiert wird, der dazu ausgebildet ist, das neue Verfahren auszuführen, wenn der Programmcode auf der Auswerte- und Steuereinheit des Koordinatenmessgerätes ausgeführt wird.

Ein Vorteil des neuen Verfahrens bzw. der neuen Vorrichtung besteht unter anderem darin, dass es die Vorteile der zwei bisher alternativen Verfahren zur Pfadplanung (Pfadberechnung in Echtzeit und Pfadberechnung im Voraus) verbindet und sozusagen einen abgewandelten Hybrid aus beiden Ansätzen darstellt.

Die besonders vorteilhafte Veränderung gegenüber dem Stand der Technik ist der Einsatz des Datenspeichers. Der Datenspeicher ist vorzugsweise ein Zwischenspeicher, der in der Informationstechnik unter dem Namen "Cache" bekannt ist. Bei dem Datenspeicher handelt es sich also vorzugsweise um einen Pufferspeicher, durch den es möglich ist, aufwändige Neuberechnungen zu minimieren. Der Datenspeicher kann bspw. in Form eines RAM-Speichers ausgeführt sein, wobei grundsätzlich auch eine Implementierung des Datenspeichers auf einer SSD-Festplatte oder einem (Cloud-) Server denkbar ist. Der Zwischenspeicher bzw. Cache kann vorzugsweise als Datei in dem Prüfplan gespeichert werden. Sobald der Prüfplan dann geladen wird, wird auch der Zwischenspeicher samt Datenbank in den RAM geladen.

Auf dem Datenspeicher ist die Datenbank gespeichert, wobei vorliegend unter dem Begriff "Datenbank" nicht notwendigerweise eine Datenbank, wie z.B. eine SQL-Datenbank, zu verstehen ist. Vielmehr kann als Datenbank auch ein Speichern von einzelnen Dateien, von Datenbündeln oder auch von Daten in sonstiger tabellarischer, textueller oder binärer Form verstanden werden.

Der Datenspeicher ist vorzugsweise nicht unmittelbar in dem Koordinatenmessgerät bzw. in der Auswerte- und Steuereinheit angeordnet, sondern hat vorzugsweise lediglich eine indirekte Verbindung zu einer oder mehreren Komponenten des Koordinatenmessgerätes.

Der Datenspeicher ist vorzugsweise unabhängig von einer durch mehrere Bewegungsachsen des Koordinatenmessgerätes gebildeten, kinematischen Kette. Der erfindungsgemäße Datenspeicher kann sowohl bei Koordinatenmessgeräten (z.B. auch mit 6-Achsen-Scanning) als auch bei Industrierobotern eingesetzt werden. Da der Datenspeicher vorzugsweise im Hintergrund arbeitet, wird die Messpfadplanungssoftware CALYPSO unterstützt und beschleunigt. Dies führt zu geringeren Rechenzeiten und zu einem höheren Komfort für einen Anwender. Beispielsweise können durch den Einsatz des Datenspeichers Kostenberechnungen bei einer Sortierung von Messelementen in einem Prüfplan beschleunigt werden.

Der Datenspeicher kann ferner direkte oder indirekte Informationen (z.B. aktuelle Messelemente, Reihenfolge der Messelemente, etc.) aus einem vorab, bspw. mit der Software CALYPSO, erstellten Messprüfplan erhalten, was jedoch für die Funktion nicht maßgebend ist. Der Datenspeicher kann vorzugsweise als "Plug-In" der Messpfadgenerierung aufgefasst werden, das sozusagen stets "im Hintergrund" mitarbeitet. Vorzugsweise kann der Datenspeicher auch für mehrere Koordinatenmessgeräte als Zwischenspeicher dienen. Für die Messsoftware macht es vorzugsweise keinen Unterschied, ob der Cache vorhanden ist oder nicht (abgesehen von der Berechnungszeit), da immer die gleichen Schnittstellen angesprochen werden.

Durch den Datenspeicher, in dem die Datenbank mit einer Vielzahl von vordefinierten Messpfaden gespeichert ist, kann die Speicherung der Messpfade dynamisch, sozusagen ähnlich zum Echtzeit-Betrieb, durchgeführt werden. Dies führt im CNC-Steuerbetrieb, in dem der Messkopf von einer gewünschten Startposition zu einer gewünschten Zielposition verfahren wird, zu einer Einsparung von Rechenzeit. Hierdurch kann die Zeit, die zur Ansteuerung neuer Messpunkte benötigt wird, verkürzt werden.

Vorzugsweise kann die Vielzahl von vordefinierten Messpfaden zusätzlich auf einem Backup-Datenspeicher gespeichert werden. Zudem ist es bevorzugt, wenn die Vielzahl von vordefinierten Messpfaden auch von einem anderen Speichermedium in den Datenspeicher geladen werden kann, wobei der Datenspeicher vorzugsweise zur Speicherung der Vielzahl von vordefinierten Messpfaden in einem beliebigen Datenformat ermöglicht. Vorzugsweise können neben der jeweiligen Start- und Zielposition auch weitere Eigenschaften der Messpfade (z.B. Informationen zu den Messelementen) gespeichert werden. Ebenfalls ist eine Speicherung von für den Datenspeicher spezifischen Größen, wie z.B. dessen Kapazität und Rundungstoleranz, möglich.

Die Vielzahl von vordefinierten Messpfaden resultiert vorzugsweise aus vorab durchgeführten Koordinatenmessungen, die mit dem Koordinatenmessgerät durchgeführt wurden. Bei den zuvor durchgeführten Messungen wurden vorzugsweise jeweils zumindest die jeweiligen Start- und Zielposition des Messkopfes als Messpfad in dem Datenspeicher bzw. der Datenbank gespeichert. Diese vordefinierten Messpfade stehen in gespeicherter, abrufbarer Form zur Verfügung und dienen quasi als Datenbank für zukünftig durchzuführende (CNC-) Steuerung des Messkopfes.

Der Datenspeicher dient zur Zwischenspeicherung von Messpfaden bzw. Verfahrwegen. Dabei ist es vorzugsweise unerheblich, wie die Vielzahl von vordefinierten Messpfaden erzeugt wurde. Bspw. kann die Vielzahl von vordefinierten Messpfaden durch (manuelle) Anwendereingabe, eine halbautomatische, softwarebasierte Messpfadgenerierung oder durch Messpfadplanung erfolgen. Die Zwischenspeicherung der Vielzahl von Messpfaden kann bspw. auch im Voraus durchgeführt werden und muss nicht notwendigerweise im Live-Betrieb des Koordinatenmessgerätes, d.h. bspw. während des CNC-Ablaufs, erfolgen.

Wird durch einen Eingabebefehl bspw. eine neue, erste Start- und Zielposition definiert, die jeweils Teil eines noch nicht berechneten Messpfades ist, kann vorzugsweise die Datenbank nach einem (ersten) Messpfad einer vorherigen Messung durchsucht werden, der eine zweite Start- und Zielposition hat, die der erste Start- und Zielposition innerhalb der vordefinierten Toleranz entspricht.

Die Toleranz entspricht vorzugsweise einer Fertigungstoleranz des Koordinatenmessgerätes. D.h. mit anderen Worten, dass die vordefinierte Toleranz angibt, mit welcher reproduzierbaren Genauigkeit das Koordinatenmessgeräte ein und denselben Messpunkt an dem Messobjekt anfahren kann. Weicht die erste Start- und/oder Zielposition von der zweiten vordefinierten Start- und/oder Zielposition bspw. um mehrere zehntel Millimeter ab und weist das Koordinatenmessgerät eine Messtoleranz bzw. eine Anfahrgenauigkeit in dieser Größenordnung auf, wird der erste Messpfad aus dem Datenspeicher geladen, obwohl die erste Start- und Zielposition nicht exakt mit der zweiten Start- und Zielposition übereinstimmt.

Bei dem Eingabebefehl kann es sich um einen manuellen Eingabe- bzw. Steuerbefehl handeln, der bspw. durch einen Anwender in die Steuereinheit eingegeben wird. Alternativ oder ergänzend kann es sich um einen automatisch, bspw. durch CALYPSO, generierten Steuerbefehl handeln, durch den vorzugsweise basierend auf dem mit CALYPSO erstellten Messprüfplan zumindest eine Start- und Zielposition zum Anfahren eines bestimmten Messpunktes generiert wird.

Wird ein entsprechender Messpfad in der Datenbank gefunden, liest die die Auswerte- und Steuereinheit diesen (ersten) Messpfad aus der Datenbank aus und steuert den Messkopf aus Basis dieses Messpfades. Dies hat den Vorteil, dass nicht immer ein neuer Messpfad zwischen der eingegebenen Start- und Zielposition berechnet werden muss, sondern ein bereits vorgespeicherter, vordefinierter Messpfad verwendet werden kann, wenn dieser innerhalb der vordefinierten Toleranz liegt. Hierdurch wird die Rechenzeit verkürzt.

Wird hingegen keine zweite Start- und Zielposition gefunden, die innerhalb der vordefinierten Toleranz mit der eingegebenen ersten Start- und Zielposition übereinstimmt, wird vorzugsweise durch einen bekannten Algorithmus zur Pfadplanung ein neuer zweiter Messpfad berechnet, an die Steuereinheit übergeben und zur Steuerung des Messkopfes verwendet. Der zweite Messpfad wird in diesem Fall in dem Datenspeicher gespeichert, um die Anzahl der vordefinierten Messpfade für nachfolgende Messungen zu erhöhen. Mit steigender Anzahl an gespeicherten, vordefinierten Messpfaden steigt die Wahrscheinlichkeit, dass bei einem Durchsuchen der Datenbank ein Messpfad gefunden wird, dessen Start- und Zielposition mit der eingegebenen ersten Start- und Zielposition innerhalb der vordefinierten Toleranz übereinstimmen, so dass, wenn nicht gewünscht, keine Neuberechnung durchgeführt werden muss.

Das Bewegen des Messkopfes zwischen der Start- und Zielposition erfolgt durch Ansteuerung von Antrieben der Bewegungsachsen des Koordinatenmessgerätes und durch Änderung zumindest eines Freiheitsgrades zumindest einer der Bewegungsachsen.

In einer Ausgestaltung weist das Verfahren, wenn die erste und die zweite Startposition und/oder die erste und die zweite Zielposition nicht innerhalb der vordefinierten Toleranz übereinstimmt, ferner die Schritte auf: Durchsuchen der Datenbank nach einem dritten vordefinierten Messpfad mit einer vierten Startposition und einer vierten Zielposition, bei dem die erste Startposition und die vierten Zielposition und die erste Zielposition und die vierten Startposition innerhalb der vordefinierten Toleranz miteinander übereinstimmt, und wenn der dritte vordefinierte Messpfad gefunden wird; Auslesen des dritten Messpfades aus der Datenbank; Invertieren der vierten Startposition und der vierten Zielposition; und Bewegen des Messkopfes entlang des dritten Messpfades von der invertierten vierten Zielposition zu der invertierten vierten Startposition, in der das Erfassen des Messpunktes erfolgt.

Diese Ausgestaltung hat den Vorteil, dass vor dem Initiieren einer Neuberechnung des zweiten Messpfades, für die Rechenzeit zur Verfügung gestellt werden muss, vorab überprüft wird, ob in dem Datenspeicher ein vordefinierter Messpfad vorgespeichert ist, dessen zugehörige Start- und Zielposition räumlich zwar mit der eingegebenen ersten Start- und Zielposition übereinstimmt, allerdings Start und Ziel des zugehörigen Messpfades vertauscht waren. Wenn der erste Messpfad in dem Datenspeicher nicht gefunden wird, wird zunächst in dem Datenspeicher nach einem invertierten Messpfad gesucht. Der invertierte Messpfad entspricht betragsmäßig dem ersten Messpfad, allerdings muss eine Bewegungsrichtung des Messkopfes umgekehrt werden, um zwischen der gewünschten vierten Start- und Zielposition zu verfahren. Ist ein invertierter Messpfad im Datenspeicher vorhanden, entspricht die erste Startposition vierten Zielposition und die erste Zielposition der vierten Startposition. Das Invertieren der vierten Start- und Zielposition kann vorzugsweise durch eine Umdefinieren bzw. Markieren der jeweiligen Positionskoordinaten als Ziel- bzw. Startposition oder durch ein Umkehren einer vorzugsweise zu dem dritten vordefinierten Messpfad gehörenden Verfahrrichtung des Messkopfes erfolgen.

Diese Ausgestaltung adressiert das sogenannte "symmetrische Problem". Ein symmetrisches Problem kann mathematische folgendermaßen formuliert werden: Ergebnis_{a,b} = -Ergebnis_{b,a}. Wenn die Auswerte- und Steuereinheit bei einer solchen symmetrischen Problemstellung den ersten Messpfad mit einer vorzugsweise zu diesem gehörenden ersten Verfahrrichtung nicht auffinden kann, wird nach einem umgekehrten ersten Messpfad gesucht. Falls ein solcher gefunden wird, wird dieser abgerufen und richtungsmäßig invertiert. Dadurch kann vorzugsweise die (Neu-) Berechnung des zweiten Messpfades verhindert werden, was zu einer Rechenzeiteinsparung und zu einer Speicherplatzeinsparung führt.

In einer weiteren Ausgestaltung weist das Verfahren ferner den Schritt des Anpassens der jeweiligen Start- und/oder Zielposition des jeweils ausgelesenen Messpfades zum Ausgleichen der vordefinierten Toleranz auf.

Diese Ausgestaltung hat den Vorteil, dass Abweichungen zwischen der ersten der Start- und der zweiten Startposition und/oder der ersten Zielposition und der zweiten Zielposition ausgeglichen werden können. Die Abweichungen entstehen bspw. durch Fertigungsungenauigkeiten bei der Fertigung des Koordinatenmessgerätes (z.B. an den Antrieben oder den Bewegungsachsen) und führen dazu, dass das Koordinatenmessgerät im späteren Betrieb lediglich mit einer toleranzbehafteten Genauigkeit eine gewisse Position im Raum anfahren kann. Ferner können die Abweichungen, wie bereits oben beschrieben, auch durch Schwankungen bei der Positionierung des Bauteils entstehen. Mit anderen Worten wird die Start- und/oder Zielposition des aus dem Datenspeicher ausgelesenen Messpfades in einer geeigneten Weise, z.B. unter Einberechnung der vordefinierten Toleranz, modifiziert, so dass diese mit der eingegebenen erste Start-und/oder Zielposition übereinstimmt. Dadurch kann die Genauigkeit beim Anfahren des gewünschten Messpunktes erhöht und somit die Messgenauigkeit verbessert werden.

In einer weiteren Ausgestaltung weist das Verfahren ferner die Schritte auf: Vergleichen der jeweils angepassten Startposition mit der ersten Startposition und der jeweils angepassten Zielposition mit der ersten Zielposition; und wenn die erste und die jeweils angepasste Startposition und die erste und die jeweils angepasste Zielposition innerhalb einer vordefinierten zweiten Toleranz übereinstimmt, Bewegen des Messkopfes entlang des angepassten Messpfades von der angepassten Startposition zu der angepassten Zielposition, in der das Erfassen des Messpunktes erfolgt, und wenn die erste und die jeweils angepasste Startposition und/oder die erste und die jeweils angepasste Zielposition nicht innerhalb der vordefinierten zweiten Toleranz übereinstimmt, Berechnen des zweiten Messpfades, Speichern des zweiten Messpfades in der Datenbank, und Bewegen des Messkopfes entlang des zweiten Messpfades von der dritten Startposition zu der dritten Zielposition, in der das Erfassen des Messpunktes erfolgt.

Diese Ausgestaltung dient als eine zusätzliche Sicherheitsstufe, durch die ein korrektes, fehlerfreies Anfahren der gewünschten Zielposition sichergestellt werden soll. Hierbei wird im Wesentlichen die aus der Anpassung resultierende angepasste Start- und/oder Zielposition mit der eingegebenen ersten Start- und Zielposition verglichen. Somit wird vermieden, dass sich Fehler bei der Anpassung auf eine nachfolgende Messpunktaufnahme übertragen und ggf. durch Fehlerverkettung verstärkt werden.

Die Ausgestaltung beschreibt sozusagen einen ersten vorteilhaften Modus des neuen Verfahrens. Wenn der angepasste Messpfad nicht valide ist oder kein Messpfad im Datenspeicher gefunden wurde, wird ein neuer Messpfad berechnet und in dem Datenspeicher gespeichert, wohingegen, wenn der angepasste Messpfad valide ist, keine Neuberechnung des Messpfades erfolgt. Die vordefinierte zweite Toleranz ist vorzugsweise kleiner als die vordefinierte Toleranz, die durch das Anpassen ausgeglichen werden sollte. Die zweite Toleranz dient vorzugsweise dazu, dass nochmals geprüft wird, ob beim Anpassen ein Fehler entstanden ist. Bei der zweiten Toleranz handelt es sich bspw. um ein Epsilon-Kriterium (Grenzwert-Kriterium bei der Rundung von Gleitkommazahlen).

Es wird sichergestellt, dass die gewünschte Zielposition auch durch den angepassten Messpfad erreicht werden kann, oder ob die Berechnung des zweiten Messpfades für eine fehlerfreies Erreichen der ersten Zielposition notwendig ist. Dies wird vorzugsweise im Zuge einer Kollisionsprüfung bewerkstelligt. Der Schritt des Überprüfens nimmt lediglich geringe Rechenzeit und Rechenleistung in Anspruch, beschleunigt allerdings das Messverfahren dahingehend, dass Messfehler minimiert werden können, so dass bspw. ein wiederholtes Aufnehmen eines Messwertes aufgrund einer vorangegangenen Fehlmessung vermindert werden kann. Ferner kann durch eine vorteilhafte Kollisionsprüfung sichergesellt werden, dass es während des Verfahrens des Messkopfes nicht zu einer Kollision mit bspw. einer Störkontur kommt, durch die Teile des Koordinatenmessgerätes bspw. beschädigt werden könnten. Es kann vorzugsweise überprüft werden, ob der angepasste Messpfad zwischen der angepassten Start- und Zielposition gegebenenfalls länger als der aus dem Datenspeicher ausgelesene Messpfad ist, und falls der angepasste Messpfad länger als der aus dem Zwischenspeicher ausgelesene Messpfad ist, kann vorzugsweise die Neuberechnung des zweite Messpfades erfolgen. Dies führt zu einer geringeren Verfahrzeit.

Der Vergleich bzw. die Validierung erfolgt vorzugsweise zudem mithilfe einer Kollisionsüberprüfung. Dabei wird validiert, dass sich in dem angepassten Messpfad, d.h. zwischen der angepassten Start- und Zielposition, kein Kollisionsobjekt befindet, mit welchem der Messkopf bei Verfahren kollidieren könnte. Das Einbeziehen einer Kollisionsprüfung ist nicht notwendig, wenn bspw. keine "neuen" Störkonturen im Prüfungsplan hinzugekommen sind und sich keine sonstigen Änderungen im Koordinatenmessgerät ereignet haben. Schlägt der Vergleich aufgrund einer erfassten Kollisionsgefahr fehl, kann bspw. ein neuer kollisionsfreier Pfad berechnet werden. Alternativ kann der CNC-Ablauf auch abgebrochen werden, wobei in einem solchen Fall vorzugsweise eine Meldung an den Anwender ausgegeben wird. Alternativ oder ergänzend wären auch andere Vergleichsmechanismen, z.B. eine reine Plausibilitätsprüfung (angepasster Messpfad darf nicht außerhalb eines gewissen Bereichs liegen) denkbar.

In einer weiteren Ausgestaltung weist das Verfahren, wenn die erste und die zweite Startposition und die erste und die zweite Zielposition innerhalb der vordefinierten Toleranz übereinstimmt, ferner die Schritte auf: Berechnen des zweiten Messpfades, Vergleichen des ersten und des zweiten Messpfades unter Einbeziehung der vordefinierten Toleranz, und wenn die dritte Startposition eine geringere Abweichung von der ersten Startposition als die zweiten Startposition von der ersten Startposition hat, und/oder die dritte Zielposition eine geringere Abweichung von der ersten Zielposition als die zweiten Zielposition von der ersten Zielposition hat, Speichern des zweiten Messpfades in der Datenbank, und Bewegen des Messkopfes entlang des zweiten Messpfades von der dritten Startposition zu der dritten Zielposition, in der das Erfassen des Messpunktes erfolgt.

In dieser Ausgestaltung wird stets, d.h. unabhängig davon, ob ein der ersten Start- und Zielposition entsprechender Messpfad in dem Datenspeicher gefunden wird, der zweite Messpfad berechnet. Diese Ausgestaltung bildet sozusagen einen zweiten Modus des neuen Verfahrens. Dies hat den Vorteil, dass ein direkter Vergleich zwischen dem vordefinierten ersten Messpfad und dem neu berechneten zweiten Messpfad erfolgen kann, so dass es möglich ist, den kürzeren bzw. schnelleren der beiden Messpfade auszuwählen und für künftige Messungen in den Datenspeicher zu speichern. Somit wird stets eine neue Messpfadplanung angestoßen und, insofern ein erster Messpfad im Datenspeicher gefunden und gegebenenfalls angepasst und validiert wurde, mit dem neu berechneten zweiten Messpfad verglichen. Ist der neu berechnete Messpfad kürzer, wird dieser verwendet und in den Datenspeicher geschrieben. Wurde hingegen kein entsprechender erster Messpfad in dem Datenspeicher gefunden, erfolgt das Anfahren der Zielposition basierend auf dem neu berechneten zweiten Messpfad.

Ein Vorteil dieser Ausgestaltung ist, dass durch ein kontinuierliches Neuberechnen und Vergleichen der Messpfade der CNC-Ablauf insgesamt optimiert werden kann, so dass mit zunehmender Anzahl von vordefinierten Messpfaden immer optimalere (kürzere) Pfade verwendet werden können. Im Gegensatz zu dem oben erwähnten ersten Modus wird in dem zweiten Modus weniger Rechenzeit eingespart, was allerdings dadurch kompensiert werden kann, dass durch die Neuberechnung und den Vergleich kürzere Messpfade gefunden werden. Dadurch kann der CNC-Steuerablauf insgesamt im Vergleich zum ersten Modus schneller erfolgen. Obwohl der erreichbare Determinismus in dem zweiten Modus im Vergleich zu dem ersten Modus langsamer eintritt, nimmt eine Varianz der Messpfade untereinander mit steigender Anzahl der vordefinierten Messpfade, die in dem Datenspeicher gespeichert sind, ab.

In einer weiteren Ausgestaltung weist das Verfahren, wenn die erste und die zweite Startposition und die erste und die zweite Zielposition innerhalb der vordefinierten Toleranz übereinstimmt, ferner die Schritte auf: Optimieren des ausgelesenen ersten Messpfades basierend auf einem Optimierungsalgorithmus, um einen ersten optimierten Messpfad zu bestimmen, und Bewegen des Messkopfes entlang des ersten optimierten Messpfades von der zweiten Startposition zu der zweiten Zielposition, in der das Erfassen des Messpunktes erfolgt.

In dieser Ausgestaltung wird der aus dem Datenspeicher ausgelesene Messpfad vorzugsweise durch die Anwendung eines Optimierungsalgorithmus optimiert, was zu dem Vorteil der Verwendbarkeit es optimierten Messpfades führt. Diese Ausgestaltung repräsentiert sozusagen einen dritten Modus, der sich aus einer Vermischung des ersten und des zweiten Modus ergibt. Vorzugsweise lässt sich die Pfadplanung in dem dritten Modus in zwei Bereiche unterteilen. Üblicherweise besteht ein Pfadplanungsalgorithmus aus einem Unteralgorithmus (z.B. Rapidly-Exploring-Random-Tree-Algorithmus), der die Startposition mit der Zielposition verbindet. Dieser berechnete Messpfad ist durch die Berechnung zwar kollisionsfrei, hat aber nicht zwingend eine optimal Länge, da der verwendete Algorithmus zufallsbasierend ist und daher nicht darauf ausgelegt ist, den optimalen Messpfad, sondern lediglich einen möglichen Messpfad zwischen einer Start- und Zielposition zu berechnen. Alternativ oder ergänzend können bei der Messpfad-Optimierung anstelle einer reinen Optimierung der Messpfadlänge auch einzelne Freiheitsgrade der Bewegungsachsen des Koordinatenmessgerätes unterschiedlich gewichtet werden, da z.B. einem Bewegung um eine Drehachse langsamer als eine Bewegung entlang einer translatorischen Achse erfolgt. Ferner sind Längenvergleiche (z.B. zwischen zwei Messpfaden) möglich. Es können ferner auch Gewichtungskriterien zur Optimierung von Messpfaden zum Einsatz kommen.

Im Nachgang an den Pfadplanungsalgorithmus wird zusätzlich ein Optimierungsalgorithmus implementiert und auf den aus dem Datenspeicher ausgelesenen und ggf. schon angepassten Messpfad angewendet, um einen möglichst optimalen (z.B. möglichst kurzen) Messpfad zu erhalten. Ein beispielhafter Optimierungsalgorithmus kann http://www.factory-in-a-day.eu/wp-content/uploads/2017/08/paper_Advanced-Robotics_2016.pdf entnommen werden. Vorzugsweise wird dabei versucht, bspw. Zwischenschritte in einem Messpfad zu entfernen und direkt zu verbinden bzw. diese zu verschieben. Nach der Eliminierung solcher Zwischenschritte erfolgt vorzugsweise nochmals eine oder mehrere Kollisionsüberprüfung, um den optimierten Messpfad zu validieren. Der dritte Modus weist eine im Vergleich zu dem ersten Modus langsamere Ausführungsgeschwindigkeit auf, ist allerdings aufgrund der nicht stets durchzuführenden Neuberechnung eines Messpfades schneller als der zweite Modus. Im Falle eines deterministischen Optimierungsalgorithmus sind auch die durch diese optimierten Messpfade, ähnlich wie in dem ersten Modus, deterministisch.

In einer weiteren Ausgestaltung weist der Datenspeicher eine vordefinierte Speicherkapazität auf, die durch eine vordefinierte Anzahl an speicherbaren, vordefinierten Messpfaden bestimmt ist.

Unter dem Begriff "vordefinierte Speicherkapazität" wird vorliegend verstanden, dass die Größe des Datenspeichers (gemessen in Megabyte (MB) oder Gigabyte (GB)) vorzugsweise entweder durch eine maximale Speicherkapazität des Speichers als solches oder durch eine vordefinierte Partitionierung eines eigentlich größeren Speichermediums bestimmt ist. Bspw. kann auf einem Arbeitsspeicher eines Computer (RAM-Speicher), der eine maximale Speicherkapazität von 8 GB aufweist, eine Speicherpartition für den Datenspeicher von 4 GB bereitgestellt werden. Die Speicherkapazität wird vorzugsweise dadurch festgelegt, wie viele vordefinierte Messpfade in dem Datenspeicher gespeichert werden sollen. Zudem kann sich die Speicherkapazität auch an einer Anzahl an zu vermessenden Messelementen in einem Prüfplan orientieren.

In einer weiteren Ausgestaltung weist das Verfahren, wenn die vordefinierte Anzahl an speicherbaren, vordefinierten Messpfaden erreicht ist, zumindest einen der folgenden Schritte auf: Löschen zumindest eines gespeicherten, vordefinierten Messpfades, wenn dieser innerhalb einer vordefinierten Anzahl von Durchsuchungen der Datenbank nicht berücksichtigt wurde, oder Bestimmen eines kürzesten Messpfades der gespeicherten, vordefinierten Messpfade und Löschen des kürzesten Messpfades.

Gemäß dieser Ausgestaltung kann anhand von vordefinierten Regelungen bzw. Richtlinien zum Löschen von vordefinierten Messpfaden Speicherkapazität des Datenspeichers freigeräumt werden, wenn dieser voll ist oder mehrere, gespeicherte, vordefinierte Messpfade seit längerer Zeit (bei den letzten n-Messungen) nicht aus dem Speicher ausgelesen wurden. Es ist möglich anhand von vorbestimmten Kriterien zu entscheiden, welche(r) der Vielzahl von gespeicherten Messpfaden aus dem Datenspeicher gelöscht werden soll. Alternativ oder ergänzend zum Löschen kann eine Speicherung eines neu berechneten Messpfades so lange verwehrt werden, bis ein vorgespeicherter Messpfad gelöscht wurde.

Das Löschen der einzelnen, nicht mehr benötigten Messpfade erfolgt vorzugsweise anhand einer Erkennung, welcher der Messpfade während einer vordefinierten Anzahl von Messungen nicht aus dem Datenspeicher ausgelesen wurde und/oder anhand einer Ermittlung des im Datenspeicher gespeicherten, kürzesten Messpfades. Der kürzeste Messpfad kann aufgrund dessen gelöscht werden, da eine Neuberechnung dieses Messpfades die geringste Rechenzeit in Anspruch nimmt. Zudem ist ein Löschen auf Basis einer Gewichtung der beiden Löschungskriterien denkbar. Alternativ ist es auch möglich den gesamten Datenspeicher zurückzusetzen, d.h. sämtliche gespeicherte Messpfade zu Löschen. Zudem ist ein Löschen von mehreren zu einem bestimmten Messelement gehörenden Messpfaden möglich, wenn dieses Messelement aus dem Prüfplan entfernt wurde.

Das Löschen des Messpfades bzw. der Messpfade aus dem Datenspeicher kann vorzugsweise auch reversible erfolgen. Bspw. ist es möglich, einen Speicherinhalt des Datenspeichers vor dem Löschen einzelner Messpfade auf einem Sicherungsdatenträger zu speichern, um die Möglichkeit zu haben, den Dateninhalt des Datenspeichers aus dem Sicherungsdatenträger zu laden.

In einer weiteren Ausgestaltung weist die Vielzahl von vordefinierten Messpfaden zumindest eine der folgenden Informationen auf: eine Verfahrgeschwindigkeit des Messkopfes für einen oder mehrere Streckenabschnitte zwischen der jeweiligen Start- und Zielposition, einen Verfahrweg zwischen der jeweiligen Start- und Zielposition, einen Toleranzwert für die jeweiligen Start- und/oder Zielpositionen, ein Kollisionsobjekt, das zwischen der jeweiligen Start- und Zielposition angeordnet ist, einen Drehwinkel entlang einer kinematischen Kette des Koordinatenmessgerätes, oder eine Bewegungspräferenz für einen Bewegungsablauf von Bewegungsachsen des Koordinatenmessgerätes.

Diese Informationen zu der Vielzahl von Messpfaden können bspw. durch einen Anwender in CALYPSO bei der Erstellung des Prüfplans eingegeben worden sein. Durch diese zusätzlichen Informationen wird der Messpfad umfassend definiert, wodurch die Auswerte- und Steuereinheit aufgrund der über den Messpfad erfassbaren Informationen sämtliche Steuerinformationen zur optimalen Steuerung des Messkopfes direkt aus dem Datenspeicher auslesen kann.

Mit dem Toleranzwert kann ein Toleranzintervall definiert werden, innerhalb dem eine erste Start- oder Zielposition und eine zweite Start- oder Zielposition als "übereinstimmend" angesehen werden sollen. Damit können kleine Abweichungen aufgrund von Fertigungstoleranzen, Verschleiß, Änderung von Umgebungsbedingungen wie Temperatur vorteilhaft berücksichtigt werden. Der Toleranzwert kann beispielsweise für eine Start- oder Zielposition ± 0,3 mm betragen.

Unter dem Begriff "Drehwinkel entlang einer kinematischen Kette des Koordinatenmessgeräte" ist vorliegend bspw. eine Lage des Messkopfes in Bezug auf eine Drehachse zu verstehen, die bspw. beim Anfahren einer Zielposition zu berücksichtigen ist. In einigen Ausführungsbeispielen kann der Messkopf über ein Dreh-SchwenkGelenk an dem Koordinatenmessgerät befestigt sein und dementsprechend in seiner Orientierung gedreht werden. Ferner kann unter dem Begriff "Drehwinkel entlang einer kinematischen Kette des Koordinatenmessgeräte" verstanden werden, dass Informationen über einen oder mehrere Drehwinkel einer Drehachse bzw. der Gesamtkinematik (z.B. des Messkopfes oder eines Drehtisches) entlang der kinematischen Kette des Koordinatenmessgerätes verfügbar sein können.

Unter dem Begriff "Bewegungspräferenz" ist vorliegend zu verstehen, dass für einige Start- und Zielpositionen bspw. bevorzugt anzusteuernde Bewegungsachsen angegeben sein können, die ein schnelles Anfahren dieser Position ermöglichen. Dies hat unter anderem damit zu tun, dass bspw. eine Rotationsbewegung schneller oder langsamer als eine Translationsbewegung erfolgen kann. Zudem kann vorzugsweise diejenige Bewegungsachse zuerst angesteuert werden, die entlang der kinematische Kette dem Messkopf am Nächsten angeordnet ist.

In einer weiteren Ausgestaltung wird in Abhängigkeit der jeweils vordefinierten Start- und Zielposition der Vielzahl von vordefinierten Messpfaden ein jeweiliger Schlüsselwert bestimmt, durch den jeder Messpfad in der Datenbank identifiziert wird.

Der Schlüsselwert dient vorzugsweise als Identifikator, mit dem der zugehörige Messpfad aus dem Datenspeicher eindeutig ausgelesen werden kann. Als beispielhafter Schlüsselwert kann bspw. ein jeweiliger Typ einer jeweiligen Bewegungsachse und eine jeweilige Start- und Zielposition verwendet werden (Start: t:10 t:0 t:0 r:90 r:0 r:180 I Ziel: t:10 t:100 t:0 r:0 r:0 r:180). Alternativ sind auch andere Verschlüsselungen möglich, die sich eignen, einem vordefinierten Messpfad einen eindeutig identifizierbaren Schlüsselwert zuzuordnen.

In einer weiteren Ausgestaltung wird der jeweilige Schlüsselwert ferner in Abhängigkeit von der vordefinierten Toleranz bestimmt.

In dieser Ausgestaltung kann der Schlüsselwert aufgrund des Einbeziehens der vordefinierten Toleranz trotz eventueller Variationen in den Start- und/oder Zielpositionen eine eindeutige Identifizierbarkeit eines jeweiligen Messpfades gewährleisten. Beispielsweise werden diese Variationen durch Schwankungen von Zählerständen des Koordinatenmessgerätes hervorgerufen. Der Schlüsselwert wird also vorzugsweise in Abhängigkeit der vordefinierten Toleranz gerundet. Für Rotationsachse liegt die vordefinierte Toleranz bspw. bei 0,3°. Für translatorische Bewegungsachsen liegt die Toleranz bspw. bei 0,3 mm.

Die Erzeugung des Schlüsselwertes, mit dem der jeweilige Messpfad aus dem Datenspeicher abgerufen werden kann, kann vorzugsweise derart ausgebildet sein, dass für unterschiedliche Startwerte und/oder unterschiedliche Zielwerte, die jedoch jeweils innerhalb der vordefinierten Toleranz liegen, der gleiche Schlüsselwert erzeugt wird. Diese Schlüssel-Toleranz kann für jeden Freiheitsgrad (oder auch für verschiedene Maschinen/Sensoren) unterschiedlich sein. Vorzugsweise kann der Schlüsselwert Informationen zu Kollisionsobjekten aufweisen, die bspw. in einem durch CALYPSO erzeugten Prüfplan hinterlegt sind. Alternativ ist auch ein reines Durchsuchen der Datenbank mit einer Toleranzüberprüfung und/oder einer Nutzung von zusätzlichen Informationen aus dem Prüfplan (z.B. der Name des Start- und Zielmesselements, etc.) denkbar. Der Schlüsselwert kann auch derart ausgebildet sein, dass bei einer ähnlichen Kinematik des Koordinatenmessgerätes derselbe Schlüsselwert generiert wird.

In einer weiteren Ausgestaltung ist die Datenbank als Hashtabelle ausgebildet, in der die Vielzahl von vordefinierten Messpfaden gespeichert ist, wobei jedem der vordefinierten Messpfade ein jeweiliger Indexwert zugeordnet ist, wobei zu jedem der Vielzahl von vordefinierten Messpfaden ein zugehöriger Hashwert basierend auf dem jeweiligen Schlüsselwert mittels einer Hashfunktion berechnet wird, wobei der jeweilige Hashwert den jeweiligen Indexwert definiert, und wobei über den jeweiligen Hashwert in der Hashtabelle auf den jeweiligen Messpfad zugegriffen wird.

Gemäß dieser Ausgestaltung kann der Schlüsselwert vorzugsweise durch Anwendung der Hashfunktion in einen zugehörigen Hash-Wert umgewandelt werden, um mit einer Komplexität von O(1) auf den Datenspeicher bzw. die Datenbank zugreifen zu können, wobei O das sog. Landau-Symbol beschreibt, das in der Komplexitätstheorie der Informatik zur Beschreibung der Komplexität von Rechenprozessen verwendet wird. Eine Zugriffskomplexität O(1) besagt, dass der Rechenaufwand unabhängig von der Anzahl der Eingangsgrößen konstant bleibt.

Als Ergebnis der Hashfunktion erhält man vorzugsweise eine Abbildung einer Eingabemenge auf eine im Verhältnis kleinere Zielfunktion, sodass diese Zielfunktion nicht injektiv ist. Somit stellt eine Hashfunktion sozusagen eine mathematische Einwegfunktion dar. Die durch die Hashfunktion berechneten Hash-Werte werden vorzugsweise in sogenannte Hashtabellen eingesetzt. Diese Hashtabellen ermöglichen eine Zugriffskomplexität von vorzugsweise O(1).

In einer weiteren Ausgestaltung wird die Vielzahl von vordefinierten Messpfaden vorberechnet und in der Datenbank des Datenspeichers gespeichert. Anstelle einer direkten Neuberechnung des zweiten Messpfades, wenn kein adäquater Messpfad in dem Datenspeicher gefunden wird, kann dem Anwender in dieser Ausgestaltung vorzugsweise eine Meldung angezeigt werden, dass kein Messpfad gefunden wurde und eine Neuberechnung notwendig wäre, um den Messkopf von der ersten Startposition an die erste Zielposition zu verfahren. Der Anwender kann dann vorzugsweise auswählen, ob eine Neuberechnung durchgeführt werden soll.

In einer weiteren Ausgestaltung kann der Datenspeicher vorzugsweise mit einem "Gedächtnis" ausgestattet sein, sodass verschiedene (Speicher-) Revisionen von Messpfaden vorzugsweise mit demselben Schlüsselwert verschlüsselt sind. Ist ein Messpfad einer Revision, bspw. nach einem Vergleich mit der ersten Start- und Zielposition, ungültig, werden dann zunächst ältere Revisionen überprüft, bevor eine Neuberechnung des zweiten Messpfades erfolgt. Ist hingegen die maximale Speicherkapazität des Datenspeichers erreicht, ist es vorteilhaft, wenn ältere Revisionen gelöscht werden. Die einzelnen Revisionen müssen nicht notwendigerweise auf einem Datenspeicher gespeichert sein, sondern können bspw. auch auf einem Revisionsspeicher (dem "Gedächtnis") gespeichert sein. Alternativ oder ergänzend können auch alle Revisionen eines einzelnen Messpfades als Revisionsgruppe gesamthaft gelöscht werden, wenn z.B. eine bestimmte Revisionsgruppe innerhalb eines vorbestimmten Zeitintervalls nicht oder nur selten verwendet wurde.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, da der Schutzumfang der vorliegenden Erfindung lediglich durch die anhängigen Patentansprüche definiert ist. Zudem versteht es sich, dass sich die Ausgestaltungen des neuen Verfahrens in äquivalenter Weise auf die neue Vorrichtung beziehen, ohne explizit in Verbindung mit der neuen Vorrichtung genannt werden zu müssen.

Ausführungsbeispiele der Erfindung sind in der Zeichnung dargestellt und werden in der nachfolgenden Beschreibung näher erläutert. Es zeigen:
- Figur 1: ein Ausführungsbeispiel der neuen Vorrichtung, mit der das neue Verfahren ausgeführt werden kann;
- Figur 2: eine schematische Darstellung eines idealen und eines realen Messpfades an einem Messobjekt;
- Figur 3: eine schematische Darstellung einer zufallsbasierten Messpfadberechnung;
- Figur 4: eine Flussdiagramm eines ersten Ausführungsbeispiels des neuen Verfahrens;
- Figur 5: eine Flussdiagramm eines zweiten Ausführungsbeispiels des neuen Verfahrens;
- Figur 6: eine schematische Darstellung einer Messpfadanpassung;
- Figur 7: eine schematische Darstellung eines invertierten Messpfads;
- Figur 8: eine schematische Darstellung einer Messpfadänderung aufgrund eines Kollisionsobjektes; und
- Figur 9: eine tabellarische Darstellung einer Messpfadberechnung mittels des neuen Verfahrens.

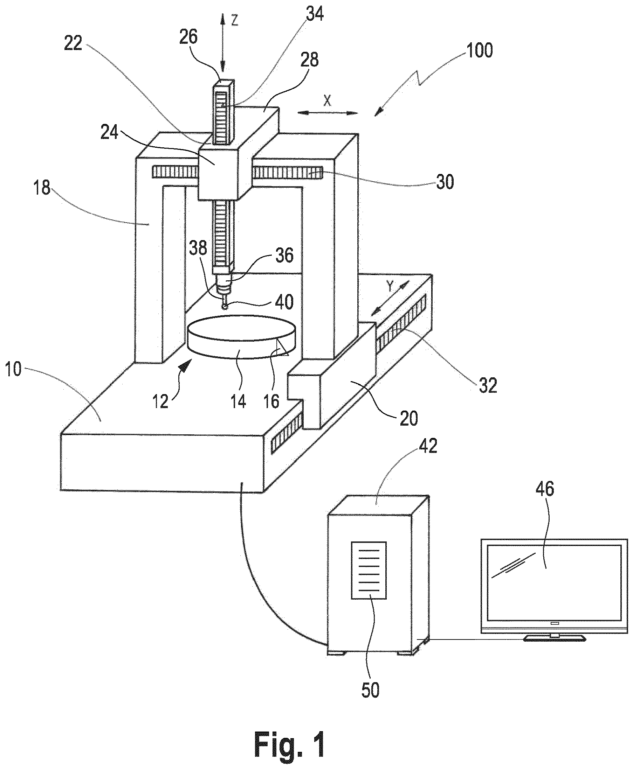

Figur 1 zeigt ein Koordinatenmessgerät bzw. eine Vorrichtung, auf dem bzw. der das neue Verfahren zum Bestimmen von dimensionellen Eigenschaften eines Messobjektes ausführbar ist. Das Koordinatenmessgerät ist in seiner Gesamtheit mit der Bezugsziffer 100 bezeichnet.

Das Koordinatenmessgerät 100 weist eine Basis 10 auf. Bei der Basis 10 handelt es sich vorzugsweise um eine stabile Platte, welche beispielsweise aus Granit gefertigt ist. Auf der Basis 10 ist eine Werkstückaufnahme 12 angeordnet, die dazu ausgebildet ist, ein Messobjekt 14 zu halten bzw. aufzunehmen. Hierzu sind an der Werkstückaufnahme bspw. eines oder mehrere Befestigungselemente 16 (z.B. Zwingen oder (Schraub-) Klemmen) vorgesehen, mittels derer das Messobjekt 14 vorzugsweise reversibel lösbar an der Werkstückaufnahme 12 befestigt werden kann. Das Messobjekt 14 ist im vorliegenden Fall ein Lehrring, wie er bspw. zum Kalibrieren von Koordinatenmessgeräten verwendet wird.

Auf der Basis 10 ist ein Portal 18 in Längsrichtung verschiebbar angeordnet. Das Portal 18 dient als bewegliche Trägerstruktur. Das Portal 18 weist zwei von der Basis 10 nach oben abragende Säulen auf, die durch einen Querträger verbunden sind und gesamthaft eine umgekehrte U-Form aufweisen.

Die Bewegungsrichtung des Portals 18 relativ zu der Basis 10 wird üblicherweise als Y- Richtung bezeichnet und erfolgt über einen ersten motorischen Antrieb 20 (z.B. einen Stellmotor). Der erste Antrieb 20 ist vorliegend in einem zu der Basis 10 weisenden Endbereich einer der abragenden Säulen angeordnet und dazu eingerichtet, das Portal 18 entlang der Y-Richtung zu verfahren. An dem oberen Querträger des Portals 18 ist ein Schlitten 22 angeordnet, der in Querrichtung über einen zweiten motorischen Antrieb 24 verfahrbar ist. Diese Querrichtung wird üblicherweise als X- Richtung bezeichnet. Der zweite Antrieb 24 ist vorliegend in dem Schlitten 22 verbaut. Der Schlitten 22 trägt eine Pinole 26, die in Z-Richtung, also senkrecht zu der Basis 10, über einen dritten motorischen Antrieb 28 verfahrbar ist. Der dritte Antrieb 28 ist in dem Schlitten 22 integriert. Es sei erwähnt, dass die Antriebe 20, 24, 28 nicht an den genannten Positionen angeordnet sein müssen. Bspw. kann der dritte Antrieb 28 in der Pinole 26 verbaut sein.

Die Bezugsziffern 30, 32, 34 bezeichnen Messeinrichtungen, anhand derer die X-, Y- und Z-Positionen des Portals 18, des Schlittens 22 und der Pinole 26 bestimmt werden können. Typischerweise handelt es sich bei den Messeinrichtungen 30, 32, 34 um Glasmaßstäbe, welche als Messskalen dienen. Diese Messskalen sind in Verbindung mit entsprechenden Leseköpfen (hier nicht dargestellt) dazu ausgebildet, die jeweils aktuelle Position des Portals 18 relativ zu der Basis 10, die Position des Schlittens 22 relativ zu dem oberen Querbalken des Portals 18 und die Position der Pinole 26 relativ zu dem Schlitten 22 zu bestimmen.

An einem unteren, freien Ende der Pinole 26 ist ein Messkopf 36 angeordnet. Der Messkopf 36 ist dazu eingerichtet, Messpunkte an dem Messobjekt 14 zu erfassen. Der Messkopf 36 ist Teil eines Messsensors, dessen Messsensorik von dem Messkopf 36 separat angeordnet oder in diesem integriert und über ein oder mehrere Kabel oder kabellos mit diesem verbunden sein kann. Der Messkopf 36 weist einen in Z-Richtung in Richtung der Basis 10 abragenden, taktilen Taststift 38 auf. In anderen, nicht gezeigten Ausführungsbeispielen kann der Messkopf 36 auch mehrere taktile und/oder optische Messköpfe aufweisen, die bspw. in unterschiedliche Raumrichtungen abragen können. Der Taststift 38 ist dazu eingerichtet, mittels eines Tastkopfes 40 eine Oberfläche des Messobjektes 14 abzutasten. Der Tastkopf 40 ist beispielsweise eine Rubinkugel.

Es sei darauf hingewiesen, dass in Figur 1 beispielhaft ein Koordinatenmessgerät 100 in Portalbauweise erläutert ist. Grundsätzlich können auch Koordinatenmessgeräte 100 in Ausleger-, Brücken-, oder Ständerbauweise zum Einsatz kommen. Je nach Bauart des Koordinatenmessgerätes 100 lässt sich die Relativbewegung von der Basis 10 und dem Messkopf 36 entlang einer, zweier oder aller drei Raumrichtungen durch eine Verfahrbarkeit der Basis 10 bzw. der Werkstückaufnahme 12 realisieren.

Alternativ kann das Koordinatenmessgerät 100 auch als ein Gelenkarmsystem (bspw. eines Roboter) mit einer Vielzahl von Freiheitsgraden ausgeführt sein. Beispielhaft kann das Koordinatenmessgerät 100 als Bauteil eines Roboters, z.B. als Roboterarm ausgestaltet sein, an dessen Endeffektor (nicht gezeigt) der Messkopf 36 angeordnet ist. Der Begriff "Koordinatenmessgerät" ist dementsprechend breit aufzufassen als jegliche Art von System, das sich zur Erfassung von Koordinaten eines Messobjekts eignet.

Bei der Abtastung der Oberfläche des Messobjektes 14 erzeugt der Tastkopf 40 ein elektrisches Messsignal, auf Basis dessen die dimensionellen Eigenschaften des zu vermessenden Messobjektes 14 ermittelt werden können. In anderen Ausführungsbeispielen kann die Geometrie des zu vermessenden Messobjektes 14 über eine oder mehrere Kameras, die bspw. an dem freien Ende der Pinole 26 angeordnet sind, optisch ermittelt werden. Zum Anfahren der Messpunkt an dem Messobjekt 14 wird der Messkopf 36 relativ zu der Werkstückaufnahme 12 bzw. zu dem Messobjekt 14 mittels der Antriebe 20, 24, 28 verfahren. Hierzu erhalten die Antriebe 20, 24, 28 von einer Auswerte- und Steuereinheit 42, 44 Steuerbefehle, auf Basis derer die Antriebe 20, 24, 28 jeweils einzeln oder gesamthaft (bspw. über eine CNC-Ansteuerung) angesteuert werden.

Die Auswerte- und Steuereinheit 42, 44 ist in Figur 1 mit dem Koordinatenmessgerät 100 über Kabel verbunden. Eine kabellose Verbindung ist ebenfalls denkbar. Zudem ist es möglich, dass die Auswerte- und Steuereinheit 42, 44 in dem Koordinatenmessgerät 100 (z.B. in der Basis 10) integriert ist.

Die Auswerte- und Steuereinheit 42, 44 ist hier zweiteilig dargestellt und kann eine numerische Maschinensteuerung 42 (Computerized Numerical Controller) und einen handelsüblichen Computer 44 beinhalten, der mit einem handelsüblichen Betriebssystem, wie etwa Windows, OSX oder Linux versehen ist. Die Steuerbefehle zum Ansteuern der Antriebe 20, 24, 28 werden vorzugsweise von einer Softwareapplikation erzeugt, die auf dem Computer 44 ausgeführt wird. Der Computer 44 kann grundsätzlich auch in der Maschinensteuerung 42 integriert sein oder umgekehrt.

Eine beispielhafte Softwareapplikation ist die von der Anmelderin vertriebene Software CALYPSO. CALYPSO ist eine Software zu Planung von Messpfaden und zur Auswertung von Messpunkten. Ein Anwender erstellt bspw. anhand von CAD-Daten des Messobjekts einen Prüfplan, mit dem die Vermessung des Messobjektes 14 erfolgen soll. Durch die Orientierung an Prüfmerkmalen erleichtert CALYPSO dem Anwender die Erstellung / Eingabe des Messablaufs, da die Prüfmerkmale in der Regel mit Angaben korrespondieren, die der Anwender einer technischen CAD-Zeichnung des Messobjekts 14 entnehmen kann. Mit der Auswahl der Prüfmerkmale erstellt CALYPSO dann die Steuerbefehle, in denen vorzugsweise ein Messpfad mit einer zugehörigen Start- und Zielposition verklausuliert ist. Die Steuerbefehle werden vorzugsweise über ein oder mehrere Kabel oder kabellos an die Maschinensteuerung 42 übermittelt.

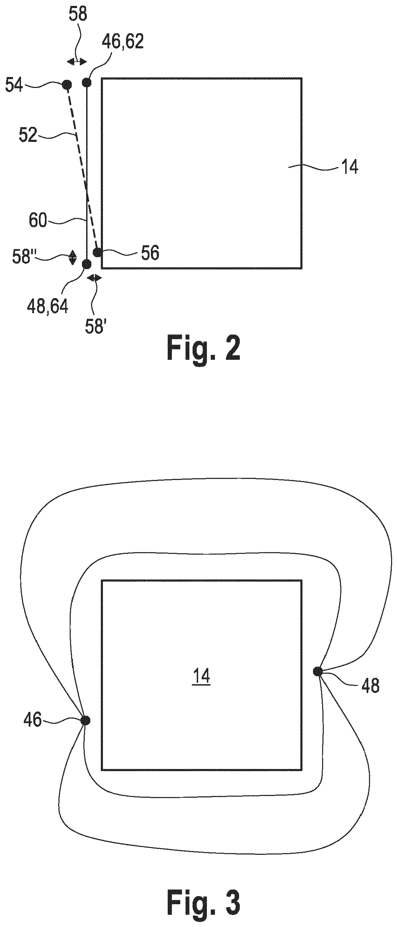

Die Auswerte- und Steuereinheit 42, 44 ist dazu eingerichtet, einen Eingabebefehl zu empfangen, der eine erste Startposition 46 repräsentiert, von der aus der Messkopf 36 verfahren werden soll, und eine erste Zielposition 48, in der das Erfassen des Messpunktes an dem Messobjekt 14 erfolgt (siehe Figur 2). Der Eingabebefehl kann mit Hilfe des Prüfplans erzeugt werden oder sich automatisch aus dem Prüfplan ergeben. Die Auswerte- und Steuereinheit 42 greift dann auf einen Datenspeicher 50 zu, der hier der Einfachheit halber in der Maschinensteuerung 42 dargestellt ist. Er könnte alternativ in dem Computer 44 enthalten sein oder als externer Datenspeicher implementiert sein, etwa als Netzwerkspeicher. Der Datenspeicher 50 kann einen flüchtigen RAM-Speicher und/oder einen nichtflüchtigen Speicher, wie etwa einen SSD-Speicher beinhalten. In dem Datenspeicher 50 ist eine Datenbank mit einer Vielzahl von vordefinierten Messpfaden gespeichert.

Die Auswerte- und Steuereinheit 42, 44 ist ferner dazu eingerichtet, die Datenbank nach einem ersten vordefinierten Messpfad 52 (siehe Figur 2) mit einer zweiten Startposition 54 und einer zweiten Zielposition 56 zu durchsuchen. Dabei wird geprüft, ob die erste und die zweite Startposition 46, 54 und die erste und die zweite Zielposition 48, 56 innerhalb einer vordefinierten Toleranz 58 übereinstimmt. Die Toleranz 58 weist, wie in Figur 2 angedeutet ist, im Zweidimensionalen eine X- und eine Y-Komponente 58', 58" (im 3D- entsprechend noch eine Z-Komponente) auf und beschreibt bspw. eine Abweichung der zweiten Startposition 54 von der ersten Startposition 46 und/oder eine Abweichung der zweiten Zielposition 56 von der ersten Zielposition 48, die bspw. in Millimetern (mm) oder Grad (°) gemessen werden kann.

Wenn die erste und die zweite Startposition 46, 54 und die erste und die zweite Zielposition 48, 56 innerhalb der vordefinierten Toleranz 58 übereinstimmt, liest die Auswerte- und Steuereinheit 42, 44 den ersten Messpfad 52 aus der Datenbank aus und steuert die Antriebe 20, 24, 28 an, um den Messkopf 36 entlang des ersten Messpfades 52 von der zweiten Startposition 54 zu der zweiten Zielposition 56 zu bewegen.

Wenn hingegen die erste und die zweite Startposition 46, 56 und/oder die erste und die zweite Zielposition 48, 56 nicht innerhalb der vordefinierten Toleranz 58 übereinstimmt, wird durch die Auswerte- und Steuereinheit 42, 44 basierend auf der ersten Startposition 46 und der ersten Zielposition 48 ein zweiter Messpfad 60 mit einer dritten Startposition 62 und einer dritten Zielposition 64 berechnet. Der zweite Messpfad 60 wird vorteilhaft in der Datenbank gespeichert. Die Maschinensteuerung 42 steuert in diesem Fall die Antriebe 20, 24, 28 derart an, dass der Messkopf 36 entlang des zweiten Messpfades 60 von der dritten Startposition 62 zu der dritten Zielposition 64 bewegt wird.

Nach Erreichen der zweiten oder dritten Zielposition 56, 64 (je nach Fall) wird der Messpunkt an dem Messobjekt 14 in Form des Messsignals aufgenommen. Eine Messsoftware auf dem Computer 44 bestimmt dann die dimensionellen Eigenschaften des Messobjekts 14 basierend auf dem Messsignal. Es versteht sich, dass die Bestimmung der dimensionellen Eigenschaften eine Vielzahl von Messignalen von einer Vielzahl von Messpunkten beinhalten kann.

Es sei erwähnt, dass in Figur 2 die neuberechnete dritte Start- und Zielposition 62, 64 beispielhaft mit der ersten Start- und Zielposition 46, 48 übereinstimmt, was allerdings mit Ausnahmen dem Regelfall entspricht. Da die Berechnung allerdings im Regelfall mittels eines zufallsbasierten Algorithmus erfolgt, kann dies in anderen Ausführungsbeispielen anders sein. Die zufallsbasierte Berechnung kann nämlich dazu führen, dass zu ein und derselben Start- und Zielposition 46, 48 verschiedene Messpfade mit unterschiedlichen Längen bzw. Wegstrecken berechnet werden. Dies ist schematisch in Figur 3 dargestellt, wobei für die eingegebene erste Start- und Zielposition 46, 48 exemplarisch vier unterschiedlich lange Messpfade gezeigt sind. Das Bewegen des Messkopfes 36 um das Messobjekt 14 (bzw. im Falle von Figur 3 um den Sicherheitsquader 14) erfolgt bei zwei Messpfaden in Richtung des Uhrzeigersinns und bei zwei Messpfaden in Gegenrichtung des Urzeigersinns.

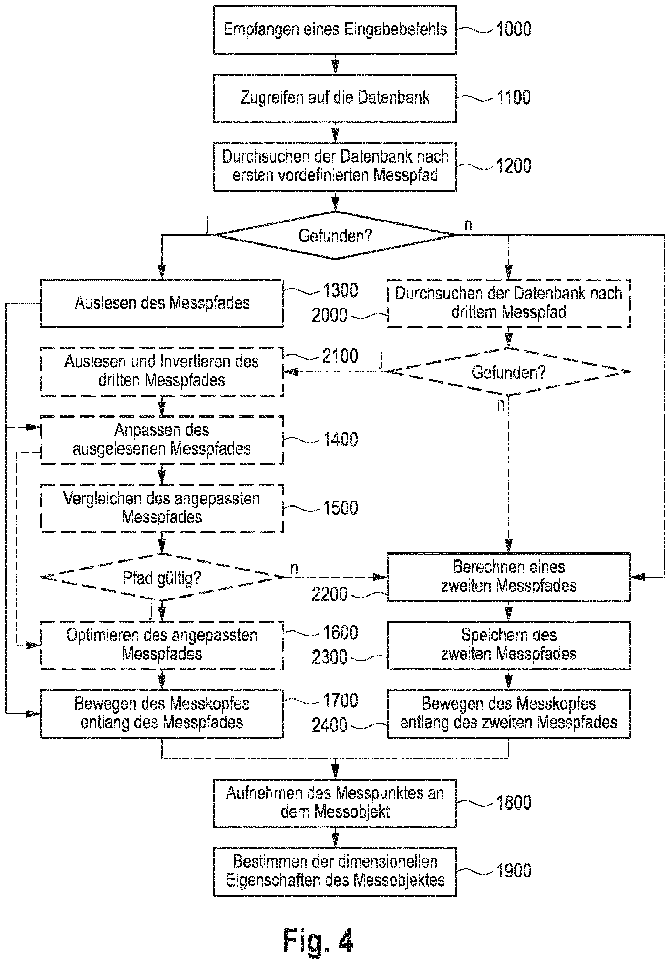

Figur 4 zeigt ein Flussdiagramm, in dem ein Ausführungsbeispiel des neuen Verfahrens dargestellt ist, das auf der neuen Vorrichtung 100 ausgeführt werden kann. In einem ersten Schritt 1000 wird der Eingabebefehl empfangen, der die erste Startposition 46 und die erste Zielposition 48 repräsentiert. In Schritt 1100 erfolgt ein Zugreifen auf die Datenbank, in der die Vielzahl von vordefinierten Messpfaden gespeichert ist, die jeweils eine vordefinierte Startposition und Zielposition aufweisen. Die Vielzahl von Messpfaden resultiert bspw. aus vorangegangenen Koordinatenmessungen. In Schritt 1200 erfolgt ein Durchsuchen der Datenbank nach einem ersten vordefinierten Messpfad 52 mit der zweiten Startposition 54 und der zweiten Zielposition 56. Das Durchsuchen 1200 erfolgt auf Grundlage dessen, ob die erste und die zweite Startposition 46, 54 und die erste und die zweite Zielposition 48, 56 innerhalb der vordefinierten Toleranz 58 übereinstimmt.

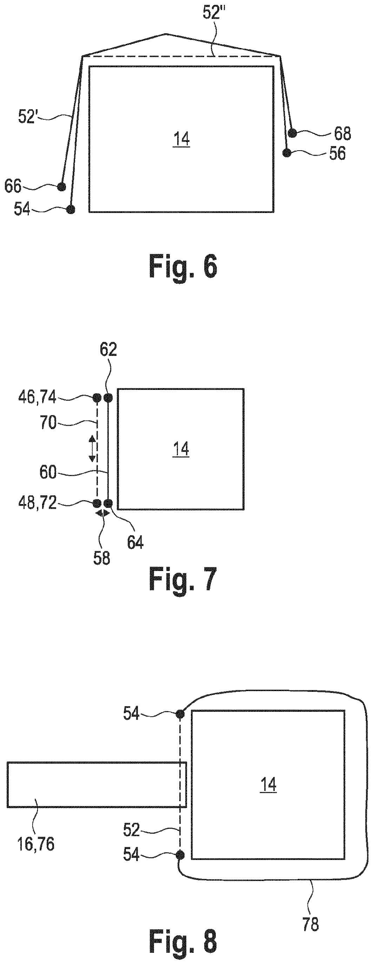

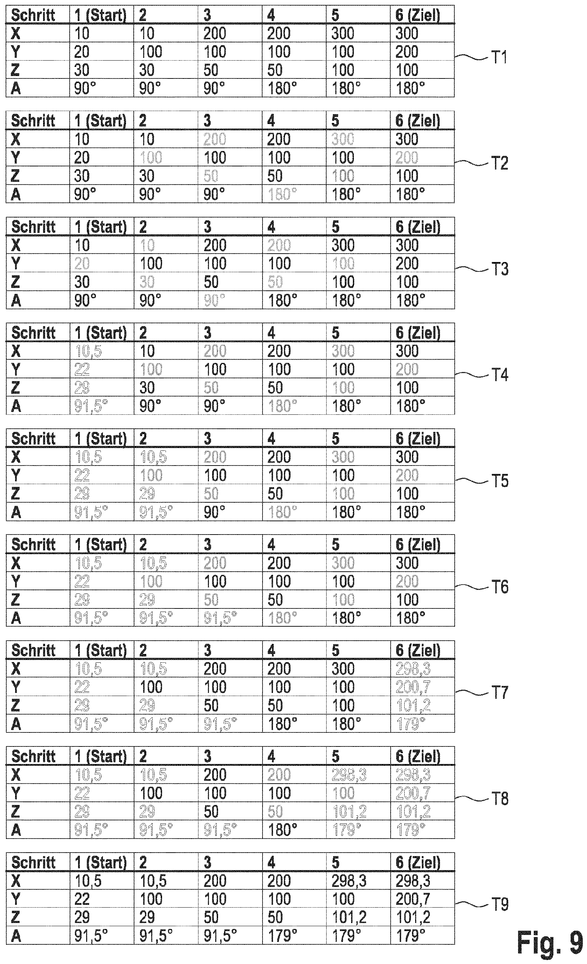

Wenn die erste und die zweite Startposition 46, 54 und die erste und die zweite Zielposition 48, 56 innerhalb der vordefinierten Toleranz 58 übereinstimmt ("j" nach Schritt 1200), ist der erste Messpfad 52 gefunden und es erfolgt in Schritt 1300 ein Auslesen des ersten Messpfades 52 aus der Datenbank. In einem optionalen Schritt 1400 kann die zweite Startposition 54 und/oder die zweite Zielposition 56 vorzugsweise zum Ausgleichen der vordefinierten Toleranz 58 angepasst werden, woraus eine angepasste zweite Start- und/oder Zielposition 66, 68 resultiert (siehe Figur 6). Im Regelfall werden auch mehrere Zwischenpositionen zwischen der jeweiligen Start- und Zielposition angepasst, wie dies beispielhaft in Fig. 9 dargestellt ist. Die zweite Startposition 54 entspricht dabei einer ursprünglichen Startposition, wohingegen die angepasste zweite Startposition einer tatsächlichen Startposition entspricht. Äquivalentes gilt für die zweite und die angepasste zweite Zielposition 56, 68. Im Anschluss an den optionalen Schritt 1400 kann in einem weiteren optionalen Schritt 1500 die jeweils angepasste Startposition 66 mit der ersten Startposition 46 und der jeweils angepassten Zielposition 68 mit der ersten Zielposition 48 verglichen werden. Wenn die erste und die angepasste zweite Startposition 46, 66 und die erste und die jeweils angepasste zweite Zielposition 48, 68 innerhalb der vordefinierten zweiten Toleranz übereinstimmt ("j" nach Schritt 1500), kann in einem weiteren optionalen Schritt 1600 der angepasste und/oder verglichene Messpfade 52' durch einen Optimierungsalgorithmus optimiert werden, wobei ein solches Optimieren bspw. in einer Verkürzung des angepassten Messpfades 52', also in einem optimierten Messpfad 52", resultiert (siehe Figur 6). In Schritt 1700 wird der Messkopf 36 dann entlang eines je nach optionaler Ausführung angepassten, verglichenen und/oder optimierten Messpfades 50, 52' oder 52"bewegt. Im Anschluss wird in Schritt 1800 der Messpunkt an dem Messobjekt 14 mit Hilfe des Messkopfes 36 aufgenommen. In Schritt 1900 werden die dimensionellen Eigenschaften des Messobjekts 14 basierend auf dem aufgenommenen Messpunkt bestimmt. Vorzugsweise wird nicht nur ein Messpunkt sondern eine Vielzahl von Messpunkten an dem Messobjekt 14 erfasst und auf Basis der erfassten Messpunkte die Gesamtgeometrie des Messobjektes 14 ermittelt. Es sein nochmals explizit darauf verwiesen, dass die Schritte 1400, 1500 und 1600 jeweils optional sind und lediglich vorteilhafte Ausführungen des neuen Verfahrens darstellen. Somit kann keiner oder lediglich nur einer der Schritte 1400, 1500 und 1600 ausgeführt werden.

Wenn hingegen beim Durchsuchen der Datenbank in Schritt 1200 die erste und die zweite Startposition 46, 54 und die erste und die zweite Zielposition 48, 56 nicht innerhalb der vordefinierten Toleranz 58 übereinstimmt ("n" nach Schritt 1200), ist der erste Messpfad 52 nicht in der Datenbank gefunden worden. In einem vorteilhaften, jedoch optionalen Schritt 2000 kann die Datenbank dann allerdings ergänzend nach einem dritten vordefinierten Messpfad 70 mit einer vierten Startposition 72 und einer vierten Zielposition 74 durchsucht werden, bei dem die erste Startposition 46 und die vierten Zielposition 74 und die erste Zielposition 48 und die vierten Startposition 72 innerhalb der vordefinierten Toleranz 58 miteinander übereinstimmt (siehe Figur 7). Wenn in dem optionalen Schritt 2000 der dritte vordefinierte Messpfad 70 gefunden wird ("j" nach Schritt 2000), wird in einem anschließenden, optionalen Schritt 2100 der dritten Messpfad 70 aus der Datenbank ausgelesen und invertiert.

Die vierte Start- und Zielposition 72, 74 wird miteinander vertauscht, so dass sich eine Bewegungsrichtung, in die der Messkopf 36 bewegt wird, ebenfalls umkehrt. Dies ist in Figur 7 schematisch durch einen Doppelpfeil angedeutet. Nach dem optionalen Schritt 2100 kann optional zumindest einer der Schritte 1400, 1500 oder 1600 durchgeführt werden oder das Verfahren springt alternativ direkt zu Schritt 1700.

Wird kein dritter Messpfad 70 gefunden ("n" nach Schritt 2000), wird hingegen in Schritt 2200 der zweite Messpfad 60 mit einer dritten Startposition 62 und einer dritten Zielposition 64 basierend auf dem Eingabebefehl berechnet (siehe Figur 7). In Schritt 2300 wird der zweite Messpfad 60 in der Datenbank des Datenspeichers 50 gespeichert. In Schritt 2400 wird der Messkopf entlang des zweiten Messpfades 60 von der dritten Startposition 62 zu der dritten Zielposition 64 bewegt. Im Anschluss an den Schritt 2400 erfolgen in diesem Fall ("n" nach Schritt 1200) die Schritte 1800 und 1900. Es sei erwähnt, dass Schritt 1200 und der optionale Schritt 2000 zeitgleich oder zeitlich nacheinander erfolgen können. Zudem sei erwähnt, dass im Falle eines negativen Prüfergebnisses nach dem oben erwähnten, optionalen Schritt 1500 ("n" nach Schritt 1500) ebenfalls die Schritte 2200, 2300, 2400, 1800 und 1900 der Reihenfolge nach ausgeführt werden. Im Falle, dass der optionale Schritt 2000 nicht ausgeführt wird, springt das Verfahren zu Schritt 2200, wenn "n" nach Schritt 1200.

Falls nach Schritt 2000 kein entsprechender dritter Messpfad gefunden wurde, ist es vorteilhaft, wenn der Datenbankzugriff fehlschlägt, d.h. kein entsprechender Messpfad gefunden wird, nach alternativen Messpfaden (Fallback-Optionen) zu suchen und diese an die Randbedingungen anzupassen, die durch die erste Start- und Zielposition bestimmt sind. Dabei ist es denkbar, dass die Suche nach solchen Fallback-Optionen rekursiv und mehrstufig ist, d.h. mit mehreren Iterations- bzw. Suchschritten einhergeht.

Ergänzend kann nach dem Schritt 2100 noch überprüft werden, ob der Messpfad in Schritt 1400 angepasst werden soll, bspw. wenn eine vorbestimmte Randbedingung erfüllt ist. Falls diese Randbedingung nicht erfüllt ist, kann anstelle des Anpassens dann alternativ auch ein Neuberechnen eines zweiten Messpfades in Schritt 2200 erfolgen, so dass das Verfahren in diesem Fall von Schritt 2100 zu Schritt 2200 springen würde (nicht dargestellt).

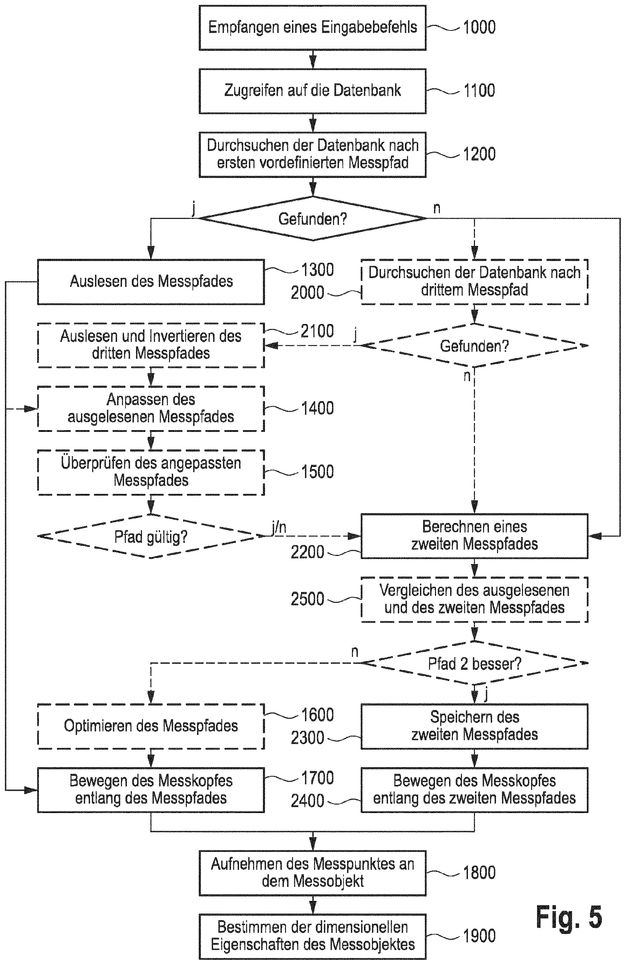

In Figur 5 ist ein Flussdiagramm eines zweiten Ausführungsbeispiels des neuen Verfahrens dargestellt. Hierbei wird nur auf die Unterschiede zu dem in Figur 4 gezeigten, ersten Ausführungsbeispiel eingegangen. Gemäß dem zweiten Ausführungsbeispiel erfolgt im Anschluss an die Überprüfung des angepassten Messpfades in dem optionalen Schritt 1500 unabhängig vom Ausgang dieser optionalen Prüfung die Berechnung des zweiten Messpfades 60 gemäß Schritt 2200. Im Anschluss an Schritt 2200 kann optional ein Vergleich des ersten Messpfades 52 oder des angepassten Messpfades 52' mit dem berechneten zweiten Messpfad 60 in einem optionalen Schritt 2500 erfolgen. Ist der zweite Messpfad 60 besser ("j" nach Schritt 2500), werden die Schritte 2300, 2400, 1800 und 1900 der Reihenfolge nach ausgeführt. Ist der zweite Messpfad 60 hingegen nicht besser ("n" nach Schritt 2500), kann optional der Optimierungsschritt 1600 durchgeführt werden oder das Verfahren schreitet direkt mit den Schritten 1700, 1800 und 1900 voran. Für den Fall, dass ein oder mehrere optionale Schritte übersprungen werden können, ist dieser Weg in den Flussdiagrammen mit einem durchgehenden Pfeil gekennzeichnet, wohingegen optionale Schrittfolgen mit gestrichelten Pfeilen verbunden sind.

In Fig. 8 ist ein aus dem Speicher abgerufener erster Messpfad 52 zwischen der zweite Start und Zielposition 54, 56 gezeigt, der jedoch durch ein Kollisionsobjekt 76 unterbrochen wird. Würde der Messkopf 36 entlang dieses Messpfades 52 nun verfahren werden, käme es zu einer Kollision und ggf. zu einer Zerstörung des Messkopfes 36. Bei dem Kollisionsobjekt 76 kann es sich bspw. um eines der oben erwähnten Befestigungselemente 16 handeln. Um die Kollision zu vermeiden, wird durch das neue Verfahren vorzugsweise ein neuer, kollisionsfreier Messpfad 78 berechnet.

Um den Messpfad aus dem Datenspeicher 50 an die tatsächliche Start- und Zielposition anzupassen, ist es vorteilhaft, den Messpfad zu analysieren und möglichst sämtliche Freiheitsgrade des Koordinatenmessgerätes 100 anzupassen (wie etwa in Schritt 1400). Dies ist exemplarisch in Fig. 9 dargestellt. Tabelle T1 zeigt einen beispielhaften Messpfad, wobei die Werte der Freiheitsgrade jeder Position, die auf einem Messpfad ausgehend von einer Startposition zu einer Zielposition abgefahren wird, im zeitlichen Verlauf abgebildet sind. Nun wird gemäß einem Ausführungsbeispiel des neuen Verfahrens analysiert, an welcher Stelle sich welcher Freiheitsgrad verändert. Dies entspricht beispielsweise dem Optimierungsschritt 1600 und ist in Tabelle T2 dargestellt, wobei die Änderung der Freiheitsgrade von der Startposition ausgehend bestimmt wird. In Tabelle T3 sind die Änderungen ausgehend von der Zielposition dargestellt. Im Anschluss daran werden die Positionen von der Startposition ausgehend so verändert, dass die Werte der Startposition solange verwendet werden, wie keine Änderung des jeweiligen Freiheitsgrads vorgegeben ist. Dies ist in den Tabellen T4-T6 dargestellt. Gleiches wird ausgehend von der Zielposition gemacht, was in den Tabellen T7 und T8 dargestellt ist. Das Vorgehen beschreibt somit einen iterativen Prozess. Im Ergebnis erhält man einen optimierten Messpfad (bspw. nach dem Schritt 1600), durch den nicht notwendige Bewegungen der Bewegungsachsen vermieden werden (siehe Tabelle T9).

Voraussetzung für dieses Verfahren ist, dass der "Charakter" des gespeicherten Messpfades, der quasi die "Vorlage" für die Modifikation darstellt, zu dem aktuell gewünschten Messpfad passt. Hat beispielsweise der Messpfad aus dem Zwischenspeicher keine Informationen über eine Drehbewegung (also bspw. eine Änderung zwischen den Freiheitsgraden 4 bis 6 in der jeweiligen Kopfzeile der Tabellen von Fig. 9), benötigt aber die aktuelle Start- und Zielstellung eine solche Drehbewegung (da sich z.B. der Freiheitsgrad 4 zwischen Start- und Zielkonfiguration ändert), reicht die in Fig. 9 dargestellte Anpassung nicht aus, sondern muss bspw. manuell um eine Drehbewegung ergänzt werden. In einem solchen Fall ist es aber grundsätzlich vorteilhafter, wenn ein zweiter Messpfad neu berechnet wird.

## Patentansprüche

1. Verfahren zum Bestimmen von dimensionellen Eigenschaften eines Messobjekts (14) mittels eines Koordinatenmessgerätes (100), das einen Messkopf (36) zum Erfassen eines Messpunktes an dem Messobjekt (14), eine Auswerte- und Steuereinheit (42) zum Steuern von Antrieben (20, 24, 28) des Koordinatenmessgerätes (100), und einen Datenspeicher (50), in dem eine Datenbank bereitgestellt ist, aufweist, wobei das Verfahren folgende Schritte aufweist:
- Empfangen (1000) eines Eingabebefehls, der eine erste Startposition (46) und eine erste Zielposition (48) aufweist,
- Zugreifen (1100) auf die Datenbank, in der eine Vielzahl von vordefinierten Messpfaden gespeichert ist, die jeweils eine vordefinierte Startposition und Zielposition aufweisen,
- Durchsuchen (1200) der Datenbank nach einem ersten vordefinierten Messpfad (52) mit einer zweiten Startposition (54) und einer zweiten Zielposition (56), bei dem die erste und die zweite Startposition (46, 54) und die erste und die zweite Zielposition (48, 56) innerhalb einer vordefinierten Toleranz (58) übereinstimmt, und
- wenn die erste und die zweite Startposition (46, 54) und die erste und die zweite Zielposition (48, 56) innerhalb der vordefinierten Toleranz (58) übereinstimmt,
- Auslesen (1300) des ersten Messpfades (52) aus der Datenbank, und
- Bewegen (1700) des Messkopfes (36) entlang des ersten Messpfades (52) von der zweiten Startposition (54) zu der zweiten Zielposition (56), in der das Erfassen des Messpunktes erfolgt, und
- wenn die erste und die zweite Startposition (46, 54) und/oder die erste und die zweite Zielposition (48, 56) nicht innerhalb der vordefinierten Toleranz (58) übereinstimmt,
- Berechnen (2200) eines zweiten Messpfades (60) mit einer dritten Startposition (62) und einer dritten Zielposition (64) basierend auf dem Eingabebefehl,
- Speichern (2300) des zweiten Messpfades (60) in der Datenbank, und
- Bewegen (2400) des Messkopfes (36) entlang des zweiten Messpfades (60) von der dritten Startposition (62) zu der dritten Zielposition (64), in der das Erfassen des Messpunktes erfolgt, und
- Aufnehmen (1800) des Messpunktes an dem Messobjekt (14) mit Hilfe des Messkopfes (36), und
- Bestimmen (1900) der dimensionellen Eigenschaften des Messobjekts (14) basierend auf dem aufgenommenen Messpunkt.

2. Verfahren nach Anspruch 1, das, wenn die erste und die zweite Startposition (46, 54) und/oder die erste und die zweite Zielposition (48, 56) nicht innerhalb der vordefinierten Toleranz (58) übereinstimmt, ferner die Schritte aufweist:
- Durchsuchen (2000) der Datenbank nach einem dritten vordefinierten Messpfad (70) mit einer vierten Startposition (72) und einer vierten Zielposition (74), bei dem die erste Startposition (46) und die vierten Zielposition (74) und die erste Zielposition (48) und die vierten Startposition (72) innerhalb der vordefinierten Toleranz (58) miteinander übereinstimmt, und wenn der dritte vordefinierte Messpfad (70) gefunden wird,
- Auslesen (2100) des dritten Messpfades (70) aus der Datenbank,
- Invertieren (2100) der vierten Startposition (72) und der vierten Zielposition (74), und
- Bewegen (1700) des Messkopfes (36) entlang des dritten Messpfades (70) von der invertierten vierten Zielposition (74) zu der invertierten vierten Startposition (72), in der das Erfassen des Messpunktes erfolgt.

3. Verfahren nach Anspruch 1 oder 2, das ferner den Schritt aufweist:
- Anpassen (1400) der jeweiligen Start- und/oder Zielposition des jeweils ausgelesenen Messpfades (52) zum Ausgleichen der vordefinierten Toleranz (58).

4. Verfahren nach Anspruch 3, das ferner den Schritt aufweist:
- Vergleichen (1500) der jeweils angepassten Startposition (66) mit der ersten Startposition (46) und der jeweils angepassten Zielposition (68) mit der ersten Zielposition (48), und
wenn die erste Startposition (46) und die jeweils angepasste Startposition (66) und die erste Zielposition (48) und die jeweils angepasste Zielposition (68) innerhalb einer vordefinierten zweiten Toleranz übereinstimmt,
- Bewegen (1700) des Messkopfes (36) entlang des angepassten Messpfades (52') von der angepassten Startposition (66) zu der angepassten Zielposition (68), in der das Erfassen des Messpunktes erfolgt, und
wenn die erste und die jeweils angepasste Startposition (46, 66) und/oder die erste und die jeweils angepasste Zielposition (48, 68) nicht innerhalb der vordefinierten zweiten Toleranz übereinstimmt,
- Berechnen (2200) des zweiten Messpfades (60),
- Speichern (2300) des zweiten Messpfades (60) in der Datenbank, und
- Bewegen (2400) des Messkopfes (36) entlang des zweiten Messpfades (60) von der dritten Startposition (62) zu der dritten Zielposition (64), in der das Erfassen des Messpunktes erfolgt.

5. Verfahren nach einem der Ansprüche 1 bis 4, das, wenn die erste und die zweite Startposition (46, 54) und die erste und die zweite Zielposition (48, 56) innerhalb der vordefinierten Toleranz (58) übereinstimmt, ferner die Schritte aufweist:
- Berechnen (2200) des zweiten Messpfades (60),
- Vergleichen (2500) des ersten und des zweiten Messpfades (52, 60) unter Einbeziehung der vordefinierten Toleranz (58), und
- wenn die dritte Startposition (62) eine geringere Abweichung von der ersten Startposition (46) als die zweiten Startposition (54) von der ersten Startposition (46) hat, und/oder die dritte Zielposition (64) eine geringere Abweichung von der ersten Zielposition (48) als die zweiten Zielposition (56) von der ersten Zielposition (48) hat,
- Speichern (2300) des zweiten Messpfades (60) in der Datenbank, und
- Bewegen (2400) des Messkopfes (36) entlang des zweiten Messpfades (60) von der dritten Startposition (62) zu der dritten Zielposition (64), in der das Erfassen des Messpunktes erfolgt.

6. Verfahren nach einem der Ansprüche 1 bis 4, das, wenn die erste und die zweite Startposition (46, 54) und die erste und die zweite Zielposition (48, 56) innerhalb der vordefinierten Toleranz (58) übereinstimmt, ferner die Schritte aufweist:
- Optimieren (1600) des ausgelesenen ersten Messpfades (52) basierend auf einem Optimierungsalgorithmus, um einen ersten optimierten Messpfad (52") zu bestimmen, und
- Bewegen (1700) des Messkopfes (36) entlang des ersten optimierten Messpfades (52") von der zweiten Startposition (54) zu der zweiten Zielposition (56), in der das Erfassen des Messpunktes erfolgt.

7. Verfahren nach einem der Ansprüche 1 bis 6, wobei der Datenspeicher (50) eine vordefinierte Speicherkapazität aufweist, die durch eine vordefinierte Anzahl an speicherbaren, vordefinierten Messpfaden bestimmt ist.

8. Verfahren nach Anspruch 7, das ferner, wenn die vordefinierte Anzahl an speicherbaren, vordefinierten Messpfaden erreicht ist, zumindest einen der folgenden Schritte aufweist:
- Löschen zumindest eines gespeicherten, vordefinierten Messpfades, wenn dieser innerhalb einer vordefinierten Anzahl von Durchsuchungen der Datenbank nicht berücksichtigt wurde, oder
- Bestimmen eines kürzesten Messpfades der gespeicherten, vordefinierten Messpfade und Löschen des kürzesten Messpfades.

9. Verfahren nach einem der Ansprüche 1 bis 8, wobei die Vielzahl von vordefinierten Messpfaden zumindest eine der folgenden Informationen aufweist:
- eine Verfahrgeschwindigkeit des Messkopfes (36) für einen oder mehrere Streckenabschnitte zwischen der jeweiligen Start- und Zielposition,
- einen Verfahrweg zwischen der jeweiligen Start- und Zielposition,
- einen Toleranzwert (58) für die jeweiligen Start- und/oder Zielpositionen,
- ein Kollisionsobjekt (16, 76), das zwischen der jeweiligen Start- und Zielposition angeordnet ist,
- einen Drehwinkel entlang einer kinematischen Kette des Koordinatenmessgerätes (100), oder
- eine Bewegungspräferenz für einen Bewegungsablauf von Bewegungsachsen des Koordinatenmessgerätes (100).

10. Verfahren nach einem der Ansprüche 1 bis 9, wobei in Abhängigkeit der jeweils vordefinierten Start- und Zielposition und der Vielzahl von vordefinierten Messpfaden ein jeweiliger Schlüsselwert bestimmt wird, durch den jeder Messpfad in der Datenbank identifiziert wird.

11. Verfahren nach Anspruch 10, wobei der jeweilige Schlüsselwert ferner in Abhängigkeit von der vordefinierten Toleranz (58) bestimmt wird.

12. Verfahren nach Anspruch 10 oder 11, wobei die Datenbank als Hashtabelle ausgebildet ist, in der die Vielzahl von vordefinierten Messpfaden gespeichert ist, wobei jedem der vordefinierten Messpfade ein jeweiliger Indexwert zugeordnet ist, wobei zu jedem der Vielzahl von vordefinierten Messpfaden ein zugehöriger Hashwert basierend auf dem jeweiligen Schlüsselwert mittels einer Hashfunktion berechnet wird, wobei der jeweilige Hashwert den jeweiligen Indexwert definiert, und wobei über den jeweiligen Hashwert in der Hashtabelle auf den jeweiligen Messpfad zugegriffen wird.

13. Vorrichtung zum Bestimmen von dimensionellen Eigenschaften eines Messobjekts (14), die aufweist:
- eine Werkstückaufnahme (12) zum Halten des Messobjektes (14),
- einen Messkopf (36) zum Erfassen eines Messpunktes an dem Messobjekt (14), der relativ zu der Werkstückaufnahme (12) verfahrbar ist,
- Antriebe (20, 24, 28) zum Verfahren des Messkopfes (36) entlang mehrerer Bewegungsachsen (X, Y, Z),
- eine Auswerte- und Steuereinheit (42) zum Steuern der Antriebe (20, 24, 28) und zum Empfangen eines Messsignals, das der Messkopf (36) beim Erfassen des Messpunktes erzeugt, und
- einen Datenspeicher (50), in dem eine Datenbank bereitgestellt ist, in der eine Vielzahl von vordefinierten Messpfaden gespeichert ist, die jeweils eine vordefinierte Startposition und Zielposition aufweisen,
wobei die Auswerte- und Steuereinheit (42) dazu eingerichtet ist,
- einen Eingabebefehl zu empfangen, der eine erste Startposition (46) und eine erste Zielposition (48), in der das Erfassen des Messpunktes an dem Messobjekt (14) erfolgt, aufweist,
- auf die Datenbank zuzugreifen,
- die Datenbank nach einem ersten vordefinierten Messpfad (52) mit einer zweiten Startposition (54) und einer zweiten Zielposition (56), bei dem die erste und die zweite Startposition (46, 54) und die erste und die zweite Zielposition (48, 56) innerhalb einer vordefinierten Toleranz (58) übereinstimmt, zu durchsuchen, und
wenn die erste und die zweite Startposition (46, 54) und die erste und die zweite Zielposition (48, 56) innerhalb der vordefinierten Toleranz (58) übereinstimmt,
- den ersten Messpfad (52) aus der Datenbank auszulesen, und
- die Antriebe (20, 24, 28) anzusteuern, um den Messkopf (36) entlang des ersten Messpfades (52) von der zweiten Startposition (54) zu der zweiten Zielposition (56), in der das Erfassen des Messpunktes erfolgt, zu bewegen, und
wenn die erste und die zweite Startposition (46, 54) und/oder die erste und die zweite Zielposition (48, 56) nicht innerhalb der vordefinierten Toleranz (58) übereinstimmt,
- einen zweiten Messpfad (60) mit einer dritten Startposition (62) und einer dritten Zielposition (64) basierend auf der ersten Startposition (46) und der ersten Zielposition (48) zu berechnen,
- den zweiten Messpfades (60) in der Datenbank zu speichern, und
- die Antriebe (20, 24, 28) anzusteuern, den Messkopf (36) entlang des zweiten Messpfades (60) von der dritten Startposition (62) zu der dritten Zielposition (64), in der das Erfassen des Messpunktes erfolgt, zu bewegen, und
wobei der Messkopf (36) dazu eingerichtet ist, nach Erreichen der zweiten oder dritten Zielposition (56, 64), den Messpunkt an dem Messobjekt (14) in Form des Messsignals aufzunehmen und an die Auswerte- und Steuereinheit (42) zu übermitteln, und
wobei die Auswerte- und Steuereinheit (42) ferner dazu eingerichtet ist, die dimensionellen Eigenschaften des Messobjekts (14) basierend auf dem Messsignal zu ermitteln.

14. Computerprogrammprodukt mit Programmcode, der dazu ausgebildet ist, ein Verfahren nach einem der Ansprüche 1 bis 12 auszuführen, wenn der Programmcode auf der Auswerte- und Steuereinheit (42) einer Vorrichtung gemäß Anspruch 13 ausgeführt wird.

## Claims

1. Method for determining dimensional properties of a measurement object (14) by means of a coordinate measuring machine (100), the latter comprising a measuring head (36) for capturing a measurement point on the measurement object (14), an evaluation and control unit (42) for controlling drives (20, 24, 28) of the coordinate measuring machine (100), and a data memory (50) in which a database is provided, wherein the method includes the following steps:
- receiving (1000) an input command, which includes a first start position (46) and a first end position (48),
- accessing (1100) the database, in which a multiplicity of predefined measurement paths are stored, each of the latter having a predefined start position and end position,
- searching (1200) the database for a first predefined measurement path (52) with a second start position (54) and a second end position (56), in which the first and the second start position (46, 54) and the first and the second end position (48, 56) correspond within a predefined tolerance (58), and
- if the first and the second start position (46, 54) and the first and the second end position (48, 56) correspond within the predefined tolerance (58):
- reading (1300) the first measurement path (52) from the database, and
- moving (1700) the measuring head (36) along the first measurement path (52) from the second start position (54) to the second end position (56), at which the measurement point is captured, and
- if the first and the second start position (46, 54) and/or the first and the second end position (48, 56) do not correspond within the predefined tolerance (58):
- calculating (2200) a second measurement path (60) with a third start position (62) and a third end position (64) on the basis of the input command,
- storing (2300) the second measurement path (60) in the database, and
- moving (2400) the measuring head (36) along the second measurement path (60) from the third start position (62) to the third end position (64), at which the measurement point is captured, and
- recording (1800) the measurement point on the measurement object (14) with the aid of the measuring head (36), and
- determining (1900) the dimensional properties of the measurement object (14) on the basis of the recorded measurement point.

2. Method according to Claim 1, which if the first and the second start position (46, 54) and/or the first and the second end position (48, 56) do not correspond within the predefined tolerance (58) further includes the steps of:
- searching (2000) the database for a third predefined measurement path (70) with a fourth start position (72) and a fourth end position (74), in which the first start position (46) and the fourth end position (74) and the first end position (48) and the fourth start position (72) correspond to one another within the predefined tolerance (58) and, if the third predefined measurement path (70) is found:
- reading (2100) the third measurement path (70) from the database,
- inverting (2100) the fourth start position (72) and the fourth end position (74), and
- moving (1700) the measuring head (36) along the third measurement path (70) from the inverted fourth end position (74) to the inverted fourth start position (72), at which the measurement point is captured.

3. Method according to Claim 1 or 2, which further includes the step of:
- adapting (1400) the respective start position and/or end position of the respectively read measurement path (52) for the purposes of compensating the predefined tolerance (58).

4. Method according to Claim 3, which further includes the step of:
- comparing (1500) the respectively adapted start position (66) to the first start position (46) and the respectively adapted end position (68) to the first end position (48) and
if the first start position (46) and the respectively adapted start position (66) and the first end position (48) and the respectively adapted end position (68) correspond within a predefined second tolerance:
- moving (1700) the measuring head (36) along the adapted measurement path (52') from the adapted start position (66) to the adapted end position (68), at which the measurement point is captured, and
if the first and the respectively adapted start position (46, 66) and/or the first and the respectively adapted end position (48, 68) do not correspond within the predefined second tolerance:
- calculating (2200) the second measurement path (60),
- storing (2300) the second measurement path (60) in the database, and
- moving (2400) the measuring head (36) along the second measurement path (60) from the third start position (62) to the third end position (64), at which the measurement point is captured.

5. Method according to any one of Claims 1 to 4, which if the first and the second start position (46, 54) and the first and the second end position (48, 56) correspond within the predefined tolerance (58) further includes the steps of:
- calculating (2200) the second measurement path (60),
- comparing (2500) the first and the second measurement path (52, 60) taking the predefined tolerance (58) into account, and
- if the third start position (62) has a smaller deviation from the first start position (46) than the second start position (54) has from the first start position (46) and/or if the third end position (64) has a smaller deviation from the first end position (48) than the second end position (56) has from the first end position (48):
- storing (2300) the second measurement path (60) in the database, and
- moving (2400) the measuring head (36) along the second measurement path (60) from the third start position (62) to the third end position (64), at which the measurement point is captured.

6. Method according to any one of Claims 1 to 4, which if the first and the second start position (46, 54) and the first and the second end position (48, 56) correspond within the predefined tolerance (58) further includes the steps of:
- optimizing (1600) the read first measurement path (52) on the basis of an optimization algorithm in order to determine a first optimized measurement path (52"), and
- moving (1700) the measuring head (36) along the first optimized measurement path (52") from the second start position (54) to the second end position (56), at which the measurement point is captured.

7. Method according to any one of Claims 1 to 6, wherein the data memory (50) has a predefined storage capacity, which is determined by a predefined number of storable, predefined measurement paths.

8. Method according to Claim 7, which if the predefined number of storable, predefined measurement paths has been reached further includes at least one of the following steps:
- deleting at least one stored, predefined measurement path if the latter has not been taken into account within a predefined number of searches of the database, or
- determining a shortest measurement path of the stored, predefined measurement paths and deleting the shortest measurement path.

9. Method according to any one of Claims 1 to 8, wherein the multiplicity of predefined measurement paths includes at least one of the following information items:
- a displacement speed of the measuring head (36) for one or more path sections between the respective start position and end position,
- a travel between the respective start position and end position,
- a tolerance value (58) for the respective start positions and/or end positions,
- a collision object (16, 76), which is arranged between the respective start position and end position,
- a rotary angle along a kinematic chain of the coordinate measuring machine (100), or
- a movement preference for a movement sequence of movement axes of the coordinate measuring machine (100).

10. Method according to any one of Claims 1 to 9, wherein a respective key value is determined on the basis of the respectively predefined start position and end position and the multiplicity of predefined measurement paths, each measurement path in the database being identified by said key value.

11. Method according to Claim 10, wherein the respective key value is further determined on the basis of the predefined tolerance (58).

12. Method according to Claim 10 or 11, wherein the database is formed as a hash table in which the multiplicity of predefined measurement paths are stored, wherein a respective index value is assigned to each of the predefined measurement paths, wherein, for each of the multiplicity of predefined measurement paths, an associated hash value is calculated on the basis of the respective key value by means of a hash function, wherein the respective hash value defines the respective index value, and wherein the respective measurement path is accessed via the respective hash value in the hash table.

13. Apparatus for determining dimensional properties of a measurement object (14), which comprises:
- a workpiece receptacle (12) for holding the measurement object (14),
- a measuring head (36) for capturing a measurement point on the measurement object (14), said measuring head being displaceable relative to the workpiece receptacle (12),
- drives (20, 24, 28) for displacing the measuring head (36) along a plurality of movement axes (X, Y, Z),
- an evaluation and control unit (42) for controlling the drives (20, 24, 28) and for receiving a measurement signal which the measuring head (36) generates when capturing the measuring point, and
- a data memory (50) in which a database is provided, in which a multiplicity of predefined measurement paths are stored, each of the latter having a predefined start position and end position,
wherein the evaluation and control unit (42) is configured to
- receive an input command which includes a first start position (46) and a first end position (48), at which the measurement point is captured on the measurement object (14),
- access the database,
- search the database for a first predefined measurement path (52) with a second start position (54) and a second end position (56), in which the first and the second start position (46, 54) and the first and the second end position (48, 56) correspond within a predefined tolerance (58), and
if the first and the second start position (46, 54) and the first and the second end position (48, 56) correspond within the predefined tolerance (58):
- read the first measurement path (52) from the database, and
- drive the drives (20, 24, 28) in order to move the measuring head (36) along the first measurement path (52) from the second start position (54) to the second end position (56), at which the measurement point is captured, and
if the first and the second start position (46, 54) and/or the first and the second end position (48, 56) do not correspond within the predefined tolerance (58):
- calculate a second measurement path (60) with a third start position (62) and a third end position (64) on the basis of the first start position (46) and the first end position (48),
- store the second measurement path (60) in the database, and
- drive the drives (20, 24, 28) to move the measuring head (36) along the second measurement path (60) from the third start position (62) to the third end position (64), at which the measurement point is captured, and
wherein the measuring head (36), after reaching the second or third end position (56, 64), is configured to record the measurement point on the measurement object (14) in the form of the measurement signal and transmit the latter to the evaluation and control unit (42), and
wherein the evaluation and control unit (42) is further configured to ascertain the dimensional properties of the measurement object (14) on the basis of the measurement signal.

14. Computer program product comprising program code configured to perform a method according to any of Claims 1 to 12 when the program code is executed on the evaluation and control unit (42) of an apparatus according to Claim 13.

## Revendications

1. Procédé permettant de déterminer des propriétés dimensionnelles d'un objet de mesure (14) au moyen d'un appareil de mesure de coordonnées (100) qui présente une tête de mesure (36) servant à détecter un point de mesure sur l'objet de mesure (14), une unité d'évaluation et de commande (42) servant à commander des dispositifs d'entraînement (20, 24, 28) de l'appareil de mesure de coordonnées (100), et une mémoire de données (50) dans laquelle est fournie une base de données, le procédé présentant les étapes suivantes consistant à :
- recevoir (1000) une commande d'entrée qui présente une première position de départ (46) et une première position d'arrivée (48),
- accéder (1100) à la base de données dans laquelle est stockée une pluralité de voies de mesure prédéfinies qui présentent respectivement une position de départ et une position d'arrivée prédéfinies,
- chercher (1200) dans la base de données une première voie de mesure prédéfinie (52) avec une deuxième position de départ (54) et une deuxième position d'arrivée (56), sur laquelle la première et la deuxième position de départ (46, 54) et la première et la deuxième position d'arrivée (48, 56) coïncident dans la limite d'une tolérance prédéfinie (58), et
- si la première et la deuxième position de départ (46, 54) et la première et la deuxième position d'arrivée (48, 56) coïncident dans la limite de la tolérance prédéfinie (58),
- lire (1300) la première voie de mesure (52) à partir de la base de données, et
- déplacer (1700) la tête de mesure (36) le long de la première voie de mesure (52) de la deuxième position de départ (54) à la deuxième position d'arrivée (56) à laquelle la détection du point de mesure est effectuée, et
- si la première et la deuxième position de départ (46, 54) et/ou la première et la deuxième position d'arrivée (48, 56) ne coïncident pas dans la limite de la tolérance prédéfinie (58),
- calculer (2200) une deuxième voie de mesure (60) avec une troisième position de départ (62) et une troisième position d'arrivée (64) sur la base de la commande d'entrée,
- stocker (2300) la deuxième voie de mesure (60) dans la base de données, et
- déplacer (2400) la tête de mesure (36) le long de la deuxième voie de mesure (60) de la troisième position de départ (62) à la troisième position d'arrivée (64) à laquelle la détection du point de mesure est effectuée, et
- enregistrer (1800) le point de mesure sur l'objet de mesure (14) à l'aide de la tête de mesure (36), et
- déterminer (1900) les propriétés dimensionnelles de l'objet de mesure (14) sur la base du point de mesure enregistré.

2. Procédé selon la revendication 1, qui, si la première et la deuxième position de départ (46, 54) et/ou la première et la deuxième position d'arrivée (48, 56) ne coïncident pas dans la limite de la tolérance prédéfinie (58), présente en outre les étapes consistant à :
- chercher (2000) dans la base de données une troisième voie de mesure prédéfinie (70) avec une quatrième position de départ (72) et une quatrième position d'arrivée (74) sur laquelle la première position de départ (46) et la quatrième position d'arrivée (74) et la première position d'arrivée (48) et la quatrième position de départ (72) coïncident dans la limite de la tolérance prédéfinie (58), et si le troisième voie de mesure prédéfinie (70) est trouvée
- lire (2100) la troisième voie de mesure (70) à partir de la base de données,
- inverser (2100) la quatrième position de départ (72) et la quatrième position d'arrivée (74), et
- déplacer (1700) la tête de mesure (36) le long de la troisième voie de mesure (70) de la quatrième position d'arrivée inversée (74) à la quatrième position de départ inversée (72) à laquelle la détection du point de mesure est effectuée.

3. Procédé selon la revendication 1 ou 2, présentant en outre l'étape consistant à :
- adapter (1400) la position de départ et/ou d'arrivée respective de la voie de mesure (52) respectivement lue pour compenser la tolérance prédéfinie (58).

4. Procédé selon la revendication 3, présentant en outre l'étape consistant à :
- comparer (1500) la position de départ respectivement adaptée (66) avec la première position de départ (46) et la position d'arrivée respectivement adaptée (68) avec la première position d'arrivée (48), et
si la première position de départ (46) et la position de départ respectivement adaptée (66) et la première position d'arrivée (48) et la position d'arrivée respectivement adaptée (68) coïncident dans la limite d'une deuxième tolérance prédéfinie
- déplacer (1700) la tête de mesure (36) le long de la voie de mesure adaptée (52') de la position de départ adaptée (66) à la position d'arrivée adaptée (68) à laquelle la détection du point de mesure est effectuée, et
si la première et la position de départ respectivement adaptée (46, 66) et/ou la première et la position d'arrivée respectivement adaptée (48, 68) ne coïncident pas dans la limite de la deuxième tolérance prédéfinie
- calculer (2200) la deuxième voie de mesure (60),
- stocker (2300) la deuxième voie de mesure (60) dans la base de données, et
- déplacer (2400) la tête de mesure (36) le long de la deuxième voie de mesure (60) de la troisième position de départ (62) à la troisième position d'arrivée (64) à laquelle la détection du point de mesure est effectuée.

5. Procédé selon l'une quelconque des revendications 1 à 4, qui, si la première et la deuxième position de départ (46, 54) et la première et la deuxième position d'arrivée (48, 56) coïncident dans la limite de la tolérance prédéfinie (58), présente en outre les étapes consistant à :
- calculer (2200) la deuxième voie de mesure (60),
- comparer (2500) la première et la deuxième voie de mesure (52, 60) en intégrant la tolérance prédéfinie (58), et
- si la troisième position de départ (62) présente par rapport à la première position de départ (46) un écart inférieur à celui que présente la deuxième position de départ (54) par rapport à la première position de départ (46), et/ou la troisième position d'arrivée (64) présente par rapport à la première position d'arrivée (48) un écart inférieur à celui que présente la deuxième position d'arrivée (56) par rapport à la première position d'arrivée (48)
- stocker (2300) la deuxième voie de mesure (60) dans la base de données, et
- déplacer (2400) la tête de mesure (36) le long de la deuxième voie de mesure (60) de la troisième position de départ (62) à la troisième position d'arrivée (64) à laquelle la détection du point de mesure est effectuée.

6. Procédé selon l'une quelconque des revendications 1 à 4, qui, si la première et la deuxième position de départ (46, 54) et la première et la deuxième position d'arrivée (48, 56) coïncident dans la limite de la tolérance prédéfinie (58), présente en outre les étapes consistant à :
- optimiser (1600) la première voie de mesure lue (52) sur la base d'un algorithme d'optimisation pour déterminer une première voie de mesure optimisée (52"), et
- déplacer (1700) la tête de mesure (36) le long de la première voie de mesure optimisée (52") de la deuxième position de départ (54) à la deuxième position d'arrivée (56) à laquelle la détection du point de mesure est effectuée.

7. Procédé selon l'une quelconque des revendications 1 à 6, dans lequel la mémoire de données (50) présente une capacité de stockage prédéfinie qui est déterminée par un nombre prédéfini de voies de mesure prédéfinies pouvant être stockées.

8. Procédé selon la revendication 7, qui, si le nombre prédéfini de voies de mesure prédéfinies pouvant être stockées est atteint, présente en outre au moins l'une des étapes suivantes consistant à :
- supprimer au moins une voie de mesure prédéfinie stockée si celle-ci n'a pas été prise en compte dans la limite d'un nombre prédéfini de recherches dans la base de données, ou
- déterminer une voie de mesure la plus courte parmi les voies de mesure prédéfinies stockées, et supprimer la voie de mesure la plus courte.

9. Procédé selon l'une quelconque des revendications 1 à 8, dans lequel la pluralité de voies de mesure prédéfinies présente au moins l'une des informations suivantes :
- une vitesse de déplacement de la tête de mesure (36) pour un ou plusieurs tronçons entre la position de départ et la position d'arrivée respectives,
- un trajet de déplacement entre la position de départ et la position d'arrivée respectives,
- une valeur de tolérance (58) pour les positions de départ et/ou les positions d'arrivée respectives,
- un objet de collision (16, 76) qui est disposé entre la position de départ et la position d'arrivée respectives,
- un angle de rotation le long d'une chaîne cinématique de l'appareil de mesure de coordonnées (100), ou
- une préférence de mouvement pour un processus de mouvement des axes de mouvement de l'appareil de mesure de coordonnées (100).

10. Procédé selon l'une quelconque des revendications 1 à 9, dans lequel, en fonction de la position de départ et/ou de la position d'arrivée prédéfinies respectivement et de la pluralité de voies de mesure prédéfinies, une valeur clé respective est déterminée qui identifie chaque voie de mesure dans la base de données.

11. Procédé selon la revendication 10, dans lequel la valeur clé respective est en outre déterminée en fonction de la tolérance prédéfinie (58).

12. Procédé selon la revendication 10 ou 11, dans lequel la base de données est réalisée sous forme de table de hachage dans laquelle est stockée la pluralité de voies de mesure prédéfinies, une valeur d'index respective étant associée à chacune des voie de mesure prédéfinies, dans lequel, pour chacune de la pluralité de voies de mesure prédéfinies, une valeur de hachage associée est calculée sur la base de la valeur clé respective au moyen d'une fonction de hachage, la valeur de hachage respective définissant la valeur d'index respective, et dans lequel la valeur de hachage respective permet d'accéder à la voie de mesure respective dans la table de hachage.

13. Dispositif permettant de déterminer des propriétés dimensionnelles d'un objet de mesure (14), présentant :
- un logement de pièce (12) pour maintenir l'objet de mesure (14),
- une tête de mesure (36) pour détecter un point de mesure sur l'objet de mesure (14), qui peut être déplacée par rapport au logement de pièce (12),
- des dispositifs d'entraînement (20, 24, 28) pour déplacer la tête de mesure (36) le long de plusieurs axes de mouvement (X, Y, Z),
- une unité d'évaluation et de commande (42) pour commander les dispositifs d'entraînement (20, 24, 28) et pour recevoir d'un signal de mesure que la tête de mesure (36) produit lorsqu'elle détecte le point de mesure, et
- une mémoire de données (50) dans laquelle est fournie une base de données dans laquelle est stockée une pluralité de voies de mesure prédéfinies qui présentent respectivement une position de départ et une position d'arrivée prédéfinies,
l'unité d'évaluation et de commande (42) étant conçue pour
- recevoir une commande d'entrée qui présente une première position de départ (46) et une première position d'arrivée (48) à laquelle la détection du point de mesure sur l'objet de mesure (14) est effectuée,
- accéder à la base de données,
- chercher dans la base de données une première voie de mesure prédéfinie (52) avec une deuxième position de départ (54) et une deuxième position d'arrivée (56) sur laquelle la première et la deuxième position de départ (46, 54) et la première et la deuxième position d'arrivée (48, 56) coïncident dans la limite d'une tolérance prédéfinie (58), et
si la première et la deuxième position de départ (46, 54) et la première et la deuxième position d'arrivée (48, 56) coïncident dans la limite de la tolérance prédéfinie (58)
- lire la première voie de mesure (52) à partir de la base de données, et
- piloter les dispositifs d'entraînement (20, 24, 28) pour déplacer la tête de mesure (36) le long de la première voie de mesure (52) de la deuxième position de départ (54) à la deuxième position d'arrivée (56) à laquelle la détection du point de mesure est effectuée, et
si la première et la deuxième position de départ (46, 54) et/ou la première et la deuxième position d'arrivée (48, 56) ne coïncident pas dans la limite de la tolérance prédéfinie (58)
- calculer une deuxième voie de mesure (60) avec une troisième position de départ (62) et une troisième position d'arrivée (64) sur la base de la première position de départ (46) et de la deuxième position d'arrivée (48),
- stocker la deuxième voie de mesure (60) dans la base de données, et
- piloter les dispositifs d'entraînement (20, 24, 28) pour déplacer la tête de mesure (36) le long de la deuxième voie de mesure (60) de la troisième position de départ (62) à la troisième position d'arrivée (64) à laquelle la détection du point de mesure est effectuée, et
dans lequel la tête de mesure (36) est conçue, après avoir atteint la deuxième ou troisième position d'arrivée (56, 64), pour enregistrer le point de mesure sur l'objet de mesure (14) sous la forme du signal de mesure et pour le transmettre à l'unité d'évaluation et de commande (42), et
l'unité d'évaluation et de commande (42) étant en outre conçue pour établir les propriétés dimensionnelles de l'objet de mesure (14) sur la base du signal de mesure.

14. Produit de programme informatique comprenant du code programme, qui est réalisé pour exécuter un procédé selon l'une quelconque des revendications 1 à 12 si le code programme est exécuté sur l'unité d'évaluation et de commande (42) d'un dispositif selon la revendication 13.
